# EUROPEAN PATENT APPLICATION

(11) **EP 4 387 210 A1**
(43) Date of publication of application: **19.06.2024**
(21) Application number: 22872072.8
(22) Date of filing: 22.09.2022
(51) Int. Cl.: H04M 1/72409, G06F 3/048

(54) **SCREEN IDENTIFICATION METHOD FOR DISTRIBUTED DISPLAY, MEDIUM AND ELECTRONIC DEVICE**

(30) Priority: 24.09.2021 CN 202122327031 U; 26.04.2022 CN 202210454464
(71) Applicant: Huawei Technologies Co., Ltd., Shenzhen, Guangdong 518129 (CN)
(72) Inventor: TU, Linlin, Shenzhen, Guangdong 518129 (CN); ZHOU, Liang, Shenzhen, Guangdong 518129 (CN); LIU, Hui, Shenzhen, Guangdong 518129 (CN)
(74) Representative: Gill Jennings & Every LLP
(86) International application number: PCT/CN2022/120614
(87) International publication number: WO 2023/046028

(57) **Abstract**

This application relates to the field of terminal technologies, and in particular, to a screen identification method for distributed display, a medium, and an electronic device. The method includes: A first electronic device determines target content that is in the first electronic device and that is to be continuously displayed through another electronic device. The first electronic device determines, from a plurality of electronic devices based on the target content, a second electronic device suitable for continuously displaying the target content. The first electronic device sends, to the second electronic device, continuity data needed for continuously displaying the target content on the second electronic device. The second electronic device continuously displays the target content based on the continuity data received from the first electronic device. In the technical solutions of this application, the first electronic device may determine a current application scenario based on content currently displayed, to automatically determine, from other electronic devices based on the current application scenario, the second electronic device suitable for continuously displaying the content currently displayed, helping improve user experience.

## Description

This application claims priorities to Chinese Patent Application No. 202122327031.6, filed with the China National Intellectual Property Administration on September 24, 2021 and entitled "SOURCE DISPLAY APPARATUS AND TARGET DISPLAY APPARATUS", and to Chinese Patent Application No. 202210454464.4, filed with the China National Intellectual Property Administration on April 26, 2022 and entitled "SCREEN IDENTIFICATION METHOD FOR DISTRIBUTED DISPLAY, MEDIUM, AND ELECTRONIC DEVICE", both of which are incorporated herein by reference in their entireties.

### TECHNICAL FIELD

This application relates to the field of terminal technologies, and in particular, to a screen identification method for distributed display, a medium, and an electronic device.

### BACKGROUND

With development of intelligent terminal technologies, a user or a home usually has a plurality of electronic devices. In some scenarios, the user may need to switch content currently displayed on one electronic device to another electronic device for display continuity. For example, the user reads an e-book through a mobile phone on a way off work, and may want to switch the e-book to an e-reader that is more suitable for reading after going home, to continue to read the e-book. For another example, the user may browse a web article at home through a tablet computer. When leaving home, the user may want to switch the web article on the tablet computer to a mobile phone that is more portable, to continue to browse the web article.

However, in some technical solutions for switching content currently displayed on one electronic device to another electronic device for display continuity (briefly referred to as content continuity technical solutions), the user needs to manually select an electronic device in advance for implementing a display continuity function, and the to-be-switched electronic device needs to passively establish, under an operation of the user, a connection with the electronic device selected by the user in advance for implementing the display continuity function, leading to poor user experience.

### SUMMARY

Embodiments of this application provide a screen identification method for distributed display, a medium, and an electronic device.

In the technical solutions of this application, a first electronic device first determines target content that is to be continuously displayed through another electronic device, then determines, from a plurality of electronic devices based on the determined target content, a second electronic device suitable for continuously displaying the target content, and sends, to the second electronic device, continuity data needed for continuously displaying the target content on the second electronic device. The second electronic device continuously displays the target content based on the continuity data received from the first electronic device. For example, the target display content determined by the first electronic device is content currently displayed on the first electronic device. The first electronic device may determine a current application scenario based on the content currently displayed, to automatically determine, from other electronic devices based on the current application scenario, the second electronic device suitable for continuously displaying the content currently displayed, helping improve user experience.

According to a first aspect, an embodiment of this application provides a source display apparatus, including:
a first determining unit, configured to determine target content that is in a source display apparatus and that is to be continuously displayed through another display apparatus;
a second determining unit, configured to determine, from a plurality of display apparatuses based on the target content, a target display apparatus suitable for continuously displaying the target content; and
a sending unit, configured to send, to the target display apparatus, continuity data needed for continuously displaying the target content on the target display apparatus.

For example, the target content is an online web article, an offline web article, an online e-book, an offline e-book, a video, a game, or the like.

In a possible implementation of the first aspect, the target content is content currently displayed on the source display apparatus.

In this way, a current application scenario may be determined based on the content currently displayed on the source display apparatus, so that the target display apparatus suitable for continuously displaying the target content is automatically determined from the plurality of display apparatuses based on the current application scenario, helping improve user experience.

In a possible implementation of the first aspect, the second determining unit determines, from the plurality of display apparatuses, the target display apparatus suitable for continuously displaying the target content in the following manner.

The second determining unit determines, based on the target content, an application scenario corresponding to the target content.

The second determining unit determines, from the plurality of display apparatuses based on the application scenario, the target display apparatus suitable for continuously displaying the target content.

For example, the application scenario may be an online web article reading scenario, an offline web article reading scenario, an online e-book reading scenario, an offline e-book reading scenario, a hybrid-bookshelf cross-device transfer scenario, or the like. The hybrid-bookshelf cross-device transfer scenario may be that a plurality of offline e-books, a plurality of online e-books, or a plurality of e-books including online e-books and offline e-books in a reading app of the source display apparatus are continuously managed and/or continuously displayed through a target application in the target display apparatus.

The target application in the target display apparatus may be the same as an application that is in the source display apparatus and that is used to open the target content, or may be different from the application that is in the source display apparatus and that is used to open the target content.

The application scenario of the target content is identified, and a display apparatus suitable for display continuity is automatically selected based on the identified application scenario, so that user experience may be improved.

In a possible implementation of the first aspect, the second determining unit determines, from the plurality of display apparatuses, the target display apparatus suitable for continuously displaying the target content in the following manner.

The second determining unit determines, based on the target content, that the application scenario corresponding to the target content is a reading scenario.

The second determining unit determines, from the plurality of display apparatuses based on the reading scenario, the target display apparatus suitable for continuously displaying the target content in the reading scenario.

That is, when the application scenario corresponding to the target content is identified as the reading scenario, the target display apparatus suitable for continuously displaying the target content in the reading scenario may be automatically determined from the plurality of display apparatuses, so that user experience may be improved.

In a possible implementation of the first aspect, the second determining unit determines the application scenario corresponding to the target content in the following manner.

The second determining unit determines, based on the target content, a first application that is installed on the source display apparatus and that displays the target content.

The second determining unit determines, based on the first application, the application scenario corresponding to the target content.

For example, for some apps, the application scenario is uniquely determined. For example, for a reading app, a user can only read an e-book through the reading app, and cannot chat, watch a video, or read a web article through the reading app. It is assumed that the source display apparatus stores a trustlist of apps corresponding to the reading scenario, and the trustlist includes identification information of various reading apps, for example, a WeChat reading app and a palm reading app. When learning, through listening, that an app corresponding to a current display interface is in the trustlist, the source display apparatus determines that the current application scenario is the reading scenario.

However, for some other apps, the application scenario cannot be determined. For example, a WeChat app has a plurality of views such as a chat session interface, a Moments display interface, a web article page entered through a network link, and the like. The target content needs to be parsed to further determine which interface among the chat session interface, the Moments display interface, the web article page, and the like the target content is, to obtain a uniquely determined application scenario.

In a possible implementation of the first aspect, the sending unit sends, to the target display apparatus, the continuity data needed for continuously displaying the target content on the target display apparatus in the following manner.

When the target content is online content, the sending unit sends, to the target display apparatus through Bluetooth, the continuity data needed for continuously displaying the target content on the target display apparatus.

Alternatively, when the target content is offline content, the sending unit sends, to the target display apparatus through wireless-fidelity point-to-point (Wireless-Fidelity point-to-point, Wi-Fi P2P), the continuity data needed for continuously displaying the online content on the target display apparatus.

For example, continuity data corresponding to the online web article and the online e-book is sent through Bluetooth. For another example, continuity data corresponding to the offline web article and the offline e-book is sent through Wi-Fi P2P.

Different sending manners are selected based on different types of continuity data, or based on a size of a data volume of the continuity data, so that data sending efficiency may be improved.

In a possible implementation of the first aspect, when the target content is the online web article, the continuity data is online web article continuity data, and the online web article continuity data includes a uniform resource identifier (Uniform Resource Identifier, URI) of the online web article.

Alternatively, when the target content is the offline web article, the continuity data is offline web article continuity data, and the offline web article continuity data includes a file for displaying the offline web article.

Alternatively, when the target content is the online e-book, the continuity data is online e-book continuity data, and the online e-book continuity data includes an identifier and a reading progress of the online e-book.

Alternatively, when the target content is the offline e-book, the continuity data is offline e-book continuity data, and the offline e-book continuity data includes a file and a reading progress of the offline e-book.

In a possible implementation of the first aspect, the online web article continuity data further includes at least one of a title, a parsing source, parsing time, a server source, and an integrity check identifier of the online web article.

In a possible implementation of the first aspect, the offline web article continuity data further includes at least one of a URI, a title, a parsing source, parsing time, a server source, and an integrity check identifier of the offline web article.

In a possible implementation of the first aspect, the online e-book continuity data further includes a chapter structure of the online e-book.

Therefore, the target display apparatus can synchronize a chapter of the online e-book based on the chapter structure of the online e-book.

In a possible implementation of the first aspect, the offline e-book continuity data further includes either the identifier or the chapter structure of the online e-book.

In a possible implementation of the first aspect, the continuity data includes an application package name, and the application package name indicates the target display apparatus to open the target content through an application corresponding to the application package name.

For example, when the application package name is a package name of the first application that is installed on the source display apparatus and that is used to open the target content, the target display apparatus may open the target content through the first application. For another example, when the application package name is a package name of a second application different from the package name of the first application that is installed on the source display apparatus and that is used to open the target content, the target display apparatus may open the target content through the second application.

In addition, the continuity data may not include the application package name. In this case, the target display apparatus may open the target content through an application the same as the first application that is installed on the source display apparatus and that is used to open the target content.

In a possible implementation of the first aspect, the continuity data further includes identity authentication information of the first application that is installed on the source display apparatus and that displays the target content, and the identity authentication information enables the target display apparatus to have permission to obtain the target content from a server of the first application.

In a possible implementation of the first aspect, the server of the first application that is installed on the source display apparatus and that displays the target content and a server of the second application that is installed on the target display apparatus and that continuously displays the target content have mutual access permission, to enable the server of the second application to have permission to access the target content in the server of the first application, where the first application of the source display apparatus obtains the target content from the server of the first application.

According to a second aspect, an embodiment of this application provides a target display apparatus, including:
a receiving unit, configured to receive continuity data that is sent by a source display apparatus and that is needed for continuously displaying target content on the target display apparatus, where the target content is content that is determined by a first determining unit of the source display apparatus, that is in the source display apparatus, and that is to be continuously displayed through another display apparatus; and
a display unit, configured to continuously display the target content based on the continuity data received from a sending unit of the source display apparatus.

In a possible implementation of the second aspect, when the target content is an online web article, the continuity data is online web article continuity data, and the online web article continuity data includes a uniform resource identifier (Uniform Resource Identifier, URI) of the online web article.

Alternatively, when the target content is an offline web article, the continuity data is offline web article continuity data, and the offline web article continuity data includes a file of the offline web article.

Alternatively, when the target content is an online e-book, the continuity data is online e-book continuity data, and the online e-book continuity data includes an identifier and a reading progress of the online e-book.

Alternatively, when the target content is an offline e-book, the continuity data is offline e-book continuity data, and the offline e-book continuity data includes a file and a reading progress of the offline e-book.

In a possible implementation of the second aspect, the display unit continuously displays the target content in the following manner.

When the target content is the online web article, the display unit continuously displays the online web article based on the URI received from the source display apparatus.

Alternatively, when the target content is the offline web article, the display unit continuously displays the offline web article based on the file of the offline web article received from the sending unit of the source display apparatus.

Alternatively, when the target content is the online e-book, the display unit continuously displays the online e-book based on the identifier of the online e-book received from the sending unit of the source display apparatus.

Alternatively, when the target content is the offline e-book, the display unit continuously displays the offline e-book based on the file of the online e-book received from the sending unit of the source display apparatus.

In a possible implementation of the second aspect, the online web article continuity data further includes at least one of a title, a parsing source, parsing time, a server source, and an integrity check identifier of the online web article.

In a possible implementation of the second aspect, the offline web article continuity data further includes at least one of a URI, a title, a parsing source, parsing time, a server source, and an integrity check identifier of the offline web article.

In a possible implementation of the second aspect, the online e-book continuity data further includes a chapter structure of the online e-book.

In a possible implementation of the second aspect, the offline e-book continuity data further includes either the identifier or the chapter structure of the online e-book.

In a possible implementation of the second aspect, the continuity data includes an application package name, and the application package name indicates the target display apparatus to open the target content through an application corresponding to the application package name.

In a possible implementation of the second aspect, the continuity data further includes identity authentication information of a first application that is installed on the source display apparatus and that displays the target content, and the identity authentication information enables the target display apparatus to have permission to obtain the target content from a server of the first application.

In a possible implementation of the second aspect, the server of the first application that is installed on the source display apparatus and that displays the target content and a server of a second application that is installed on the target display apparatus and that continuously displays the target content have mutual access permission, to enable the server of the second application to have permission to access the target content in the server of the first application, where the first application of the source display apparatus obtains the target content from the server of the first application.

In a possible implementation of the second aspect, the second application that displays the target content is installed on the target display apparatus, and the apparatus further includes:
a first adding unit, configured to add the target content to a bookshelf of the second application based on the continuity data received from the sending unit of the source display apparatus.

In a possible implementation of the second aspect, the apparatus further includes:
a second adding unit, configured to add the target content to a read later widget of the second application installed on the target display apparatus based on the continuity data received from the sending unit of the source display apparatus.

The read later widget is a service widget embedded in the second application, and is an interface display form of a feature ability (herein means a read later service provided by the second application). The "read later widget" moves important information or an operation of the read later service to the widget, to implement direct service delivery and facilitate a user operation.

According to a third aspect, an embodiment of this application provides a source display apparatus, including:
a memory, configured to store instructions executed by one or more processors of the source display apparatus; and
a processor, configured to: when the instructions are executed by the one or more processors, enable the source display apparatus to determine target content that is to be continuously displayed through another display apparatus; determine, from a plurality of display apparatuses based on the target content, a target display apparatus suitable for continuously displaying the target content; and enable the source display apparatus to send, to the target display apparatus, continuity data needed for continuously displaying the target content on the target display apparatus.

According to a fourth aspect, an embodiment of this application provides a source display apparatus, including:
a memory, configured to store instructions executed by one or more processors of a target display apparatus; and
a processor, configured to: when the instructions are executed by the one or more processors, enable the target display apparatus to receive continuity data that is sent by the source display apparatus and that is needed for continuously displaying target content on the target display apparatus, where the target content is content that is determined by the source display apparatus, that is in the source display apparatus, and that is to be continuously displayed through another display apparatus; and enable the target display apparatus to continuously display the target content based on the continuity data received from the source display apparatus.

According to a fifth aspect, an embodiment of this application provides a screen identification method for distributed display, including:
A first electronic device determines target content that is in the first electronic device and that is to be continuously displayed through another electronic device.

The first electronic device determines, from a plurality of electronic devices based on the target content, a second electronic device suitable for continuously displaying the target content.

The first electronic device sends, to the second electronic device, continuity data needed for continuously displaying the target content on the second electronic device.

The second electronic device continuously displays the target content based on the continuity data received from the first electronic device.

In a possible implementation of the fifth aspect, the target content is content currently displayed on the first electronic device.

In a possible implementation of the fifth aspect, that the first electronic device determines, from a plurality of electronic devices based on the target content, a second electronic device suitable for continuously displaying the target content includes:
The first electronic device determines, based on the target content, an application scenario corresponding to the target content.

The first electronic device determines, from the plurality of electronic devices based on the application scenario, the second electronic device suitable for continuously displaying the target content.

In a possible implementation of the fifth aspect, that the first electronic device determines, from a plurality of electronic devices based on the target content, a second electronic device suitable for continuously displaying the target content includes:
The first electronic device determines, based on the target content, that the application scenario corresponding to the target content is a reading scenario.

The first electronic device determines, from the plurality of electronic devices based on the reading scenario, the second electronic device suitable for continuously displaying the target content in the reading scenario.

In a possible implementation of the fifth aspect, that the first electronic device determines, based on the target content, an application scenario corresponding to the target content includes:
The first electronic device determines, based on the target content, a first application that is installed on the first electronic device and that displays the target content.

The first electronic device determines, based on the first application, the application scenario corresponding to the target content.

In a possible implementation of the fifth aspect, that the first electronic device sends, to the second electronic device, continuity data needed for continuously displaying the target content on the second electronic device includes:
When the target content is online content, the first electronic device sends, to the second electronic device through Bluetooth, the continuity data needed for continuously displaying the target content on the second electronic device.

Alternatively, when the target content is offline content, the first electronic device sends, to the second electronic device through wireless-fidelity point-to-point (Wireless-Fidelity point-to-point, Wi-Fi P2P), the continuity data needed for continuously displaying the online content on the second electronic device.

In a possible implementation of the fifth aspect, when the target content is an online web article, the continuity data is online web article continuity data, and the online web article continuity data includes a uniform resource identifier (Uniform Resource Identifier, URI) of the online web article.

Alternatively, when the target content is an offline web article, the continuity data is offline web article continuity data, and the offline web article continuity data includes a file of the offline web article.

Alternatively, when the target content is an online e-book, the continuity data is online e-book continuity data, and the online e-book continuity data includes an identifier and a reading progress of the online e-book.

Alternatively, when the target content is an offline e-book, the continuity data is offline e-book continuity data, and the offline e-book continuity data includes a file and a reading progress of the offline e-book.

In a possible implementation of the fifth aspect, that the second electronic device continuously displays the target content based on the continuity data received from the first electronic device includes:
When the target content is the online web article, the second electronic device continuously displays the online web article based on the URI received from the first electronic device.

Alternatively, when the target content is the offline web article, the second electronic device continuously displays the offline web article based on the file of the offline web article received from the first electronic device.

Alternatively, when the target content is the online e-book, the second electronic device continuously displays the online e-book based on the identifier of the online e-book received from the first electronic device.

Alternatively, when the target content is the offline e-book, the second electronic device continuously displays the offline e-book based on the file of the online e-book received from the first electronic device.

In a possible implementation of the fifth aspect, the online web article continuity data further includes at least one of a title, a parsing source, parsing time, a server source, and an integrity check identifier of the online web article.

In a possible implementation of the fifth aspect, the offline web article continuity data further includes at least one of a URI, a title, a parsing source, parsing time, a server source, and an integrity check identifier of the offline web article.

In a possible implementation of the fifth aspect, the online e-book continuity data further includes a chapter structure of the online e-book.

In a possible implementation of the fifth aspect, the offline e-book continuity data further includes either the identifier or the chapter structure of the online e-book.

In a possible implementation of the fifth aspect, a second application that displays the target content is installed on the second electronic device, and the method further includes:
The second electronic device adds the target content to a bookshelf of the second application based on the continuity data received from the first electronic device.

In a possible implementation of the fifth aspect, the method further includes:
The second electronic device adds the target content to a read later widget of the second application installed on the second electronic device based on the continuity data received from the first electronic device.

In a possible implementation of the fifth aspect, the continuity data includes an application package name, and the application package name indicates the second electronic device to open the target content through an application corresponding to the application package name.

In a possible implementation of the fifth aspect, the continuity data further includes identity authentication information of the first application that is installed on the first electronic device and that displays the target content, and the identity authentication information enables the second electronic device to have permission to obtain the target content from a server of the first application.

In a possible implementation of the fifth aspect, the server of the first application that is installed on the first electronic device and that displays the target content and a server of the second application that is installed on the second electronic device and that continuously displays the target content have mutual access permission, to enable the server of the second application to have permission to access the target content in the server of the first application, where the first application of the first electronic device obtains the target content from the server of the first application.

According to a sixth aspect, an embodiment of this application provides a screen identification method for distributed display, including:
A first electronic device determines target content that is in the first electronic device and that is to be continuously displayed through another electronic device.

The first electronic device determines, from a plurality of electronic devices based on the target content, a second electronic device suitable for continuously displaying the target content.

The first electronic device sends, to the second electronic device, continuity data needed for continuously displaying the target content on the second electronic device.

In a possible implementation of the sixth aspect, the target content is content currently displayed on the first electronic device.

In a possible implementation of the sixth aspect, that the first electronic device determines, from a plurality of electronic devices based on the target content, a second electronic device suitable for continuously displaying the target content includes:
The first electronic device determines, based on the target content, an application scenario corresponding to the target content.

The first electronic device determines, from the plurality of electronic devices based on the application scenario, the second electronic device suitable for continuously displaying the target content.

In a possible implementation of the sixth aspect, that the first electronic device determines, from a plurality of electronic devices based on the target content, a second electronic device suitable for continuously displaying the target content includes:
The first electronic device determines, based on the target content, that the application scenario corresponding to the target content is a reading scenario.

The first electronic device determines, from the plurality of electronic devices based on the reading scenario, the second electronic device suitable for continuously displaying the target content in the reading scenario.

In a possible implementation of the sixth aspect, that the first electronic device determines, based on the target content, an application scenario corresponding to the target content includes:
The first electronic device determines, based on the target content, a first application that is installed on the first electronic device and that displays the target content.

The first electronic device determines, based on the first application, the application scenario corresponding to the target content.

In a possible implementation of the sixth aspect, that the first electronic device sends, to the second electronic device, continuity data needed for continuously displaying the target content on the second electronic device includes:
When the target content is online content, the first electronic device sends, to the second electronic device through Bluetooth, the continuity data needed for continuously displaying the target content on the second electronic device.

Alternatively, when the target content is offline content, the first electronic device sends, to the second electronic device through wireless-fidelity point-to-point (Wireless-Fidelity point-to-point, Wi-Fi P2P), the continuity data needed for continuously displaying the online content on the second electronic device.

In a possible implementation of the sixth aspect, when the target content is an online web article, the continuity data is online web article continuity data, and the online web article continuity data includes a uniform resource identifier (Uniform Resource Identifier, URI) of the online web article.

Alternatively, when the target content is an offline web article, the continuity data is offline web article continuity data, and the offline web article continuity data includes a file of the offline web article.

Alternatively, when the target content is an online e-book, the continuity data is online e-book continuity data, and the online e-book continuity data includes an identifier and a reading progress of the online e-book.

Alternatively, when the target content is an offline e-book, the continuity data is offline e-book continuity data, and the offline e-book continuity data includes a file and a reading progress of the offline e-book.

In a possible implementation of the sixth aspect, the online web article continuity data further includes at least one of a title, a parsing source, parsing time, a server source, and an integrity check identifier of the online web article.

In a possible implementation of the sixth aspect, the offline web article continuity data further includes at least one of a URI, a title, a parsing source, parsing time, a server source, and an integrity check identifier of the offline web article.

In a possible implementation of the sixth aspect, the online e-book continuity data further includes a chapter structure of the online e-book.

In a possible implementation of the sixth aspect, the offline e-book continuity data further includes either the identifier or the chapter structure of the online e-book.

In a possible implementation of the sixth aspect, the continuity data includes an application package name, and the application package name indicates the second electronic device to open the target content through an application corresponding to the application package name.

In a possible implementation of the sixth aspect, the continuity data further includes identity authentication information of the first application that is installed on the first electronic device and that displays the target content, and the identity authentication information enables the second electronic device to have permission to obtain the target content from a server of the first application.

In a possible implementation of the sixth aspect, the server of the first application that is installed on the first electronic device and that displays the target content and a server of a second application that is installed on the second electronic device and that continuously displays the target content have mutual access permission, to enable the server of the second application to have permission to access the target content in the server of the first application, where the first application of the first electronic device obtains the target content from the server of the first application.

According to a seventh aspect, an embodiment of this application provides a screen identification method for distributed display, including:
A second electronic device receives continuity data that is sent by a first electronic device and that is needed for continuously displaying target content on the second electronic device, where the target content is content that is determined by the first electronic device, that is in the first electronic device, and that is to be continuously displayed through another electronic device.

The second electronic device continuously displays the target content based on the continuity data received from the first electronic device.

In a possible implementation of the seventh aspect, when the target content is an online web article, the continuity data is online web article continuity data, and the online web article continuity data includes a uniform resource identifier (Uniform Resource Identifier, URI) of the online web article.

Alternatively, when the target content is an offline web article, the continuity data is offline web article continuity data, and the offline web article continuity data includes a file of the offline web article.

Alternatively, when the target content is an online e-book, the continuity data is online e-book continuity data, and the online e-book continuity data includes an identifier and a reading progress of the online e-book.

Alternatively, when the target content is an offline e-book, the continuity data is offline e-book continuity data, and the offline e-book continuity data includes a file and a reading progress of the offline e-book.

In a possible implementation of the seventh aspect, that the second electronic device continuously displays the target content based on the continuity data received from the first electronic device includes:
When the target content is the online web article, the second electronic device continuously displays the online web article based on the URI received from the first electronic device.

Alternatively, when the target content is the offline web article, the second electronic device continuously displays the offline web article based on the file of the offline web article received from the first electronic device.

Alternatively, when the target content is the online e-book, the second electronic device continuously displays the online e-book based on the identifier of the online e-book received from the first electronic device.

Alternatively, when the target content is the offline e-book, the second electronic device continuously displays the offline e-book based on the file of the online e-book received from the first electronic device.

In a possible implementation of the seventh aspect, a second application that displays the target content is installed on the second electronic device, and the method further includes:
The second electronic device adds the target content to a bookshelf of the second application based on the continuity data received from the first electronic device.

In a possible implementation of the seventh aspect, the method further includes:
The second electronic device adds the target content to a read later widget of the second application installed on the second electronic device based on the continuity data received from the first electronic device.

According to an eighth aspect, an embodiment of this application provides a computer-readable storage medium, where the computer-readable storage medium stores instructions. When the instructions are executed on an electronic device, the electronic device is enabled to perform the method according to any one of the sixth aspect and the possible implementations of the sixth aspect or the screen identification method for distributed display according to any one of the seventh aspect and the possible implementations of the seventh aspect.

According to a ninth aspect, an embodiment of this application provides a computer program product, where the computer program product includes instructions. The instructions are used to implement the method according to any one of the sixth aspect and the possible implementations of the sixth aspect or the screen identification method for distributed display according to any one of the seventh aspect and the possible implementations of the seventh aspect.

According to a tenth aspect, an embodiment of this application provides a chip apparatus, where the chip apparatus includes:
a communication interface, configured to input and/or output information; and
a processor, configured to execute a computer executable program, to enable a device in which the chip apparatus is installed to perform the method according to any one of the sixth aspect and the possible implementations of the sixth aspect or the screen identification method for distributed display according to any one of the seventh aspect and the possible implementations of the seventh aspect.

According to an eleventh aspect, an embodiment of this application provides an electronic device, including:
a memory, configured to store instructions executed by one or more processors of the electronic device; and
a processor, configured to: when the instructions are executed by the one or more processors, perform the method according to any one of the sixth aspect and the possible implementations of the sixth aspect or the screen identification method for distributed display according to any one of the seventh aspect and the possible implementations of the seventh aspect.

### BRIEF DESCRIPTION OF DRAWINGS

FIG. 1 is a content continuity system according to some embodiments of this application;
FIG. 2A is a schematic diagram of a UI of a video continuity solution;
FIG. 2B is a flowchart of the video continuity solution shown in FIG. 2A;
FIG. 2C is a schematic diagram of a cross-device continuity reading scenario according to some embodiments of this application;
FIG. 2D is a schematic diagram of a UI for cross-device web article continuity according to some embodiments of this application;
FIG. 2E is a schematic diagram of a UI for cross-device e-book continuity according to some embodiments of this application;
FIG. 2F is a schematic diagram of a UI for a web article bookshelf of an e-reader according to some embodiments of this application;
FIG. 2G is a schematic diagram of a UI for a reading bookshelf of an e-reader according to some embodiments of this application;
FIG. 3 is a schematic diagram of a hardware structure of a mobile phone according to some embodiments of this application;
FIG. 4A and FIG. 4B are diagrams of a software layered structure of a mobile phone and an e-reader according to some embodiments of this application;
FIG. 5 is a flowchart of a mobile phone identifying an application scenario and recommending a continuity device with reference to the scenario according to some embodiments of this application;
FIG. 6 is a flowchart of an e-reader receiving continuity data from a mobile phone and performing display continuity according to some embodiments of this application;
FIG. 7A and FIG. 7B are interaction diagrams of reading a web article in a cross-device continuity manner between a mobile phone and an e-reader according to some embodiments of this application;
FIG. 8A is a schematic diagram of a UI in which a mobile phone opens a web article in Moments shown in FIG. 8A according to some embodiments of this application;
FIG. 8B is a schematic diagram of a UI in which a mobile phone recommends an e-reader as a continuity device and gives a prompt according to some embodiments of this application;
FIG. 8C is a schematic diagram of a UI in which a connected e-reader is used as a continuity device to prompt a user to select different reading service functions according to some embodiments of this application;
FIG. 8D is a schematic diagram of a UI for a read later widget of an e-reader according to some embodiments of this application;
FIG. 9A and FIG. 9B are interaction diagrams of reading an e-book in a cross-device continuity manner between a mobile phone and an e-reader according to some embodiments of this application;
FIG. 10A is a schematic diagram of a UI in which a mobile phone recommends an e-reader as a continuity device and gives a prompt according to some embodiments of this application;
FIG. 10B is a schematic diagram of a UI in which a user touches and holds a continuity reading app on a desktop of an e-reader according to some embodiments of this application;
FIG. 10C is a schematic diagram of a UI to which a read later widget is added on a desktop of an e-reader according to some embodiments of this application;
FIG. 10D is a schematic diagram of a UI in which a user clicks to open the read later widget shown in FIG. 10C according to some embodiments of this application;
FIG. 11A and FIG. 11B are interaction diagrams of continuing e-books on bookshelves in batches between a mobile phone and an e-reader in a cross-device manner according to some embodiments of this application;
FIG. 12 is a schematic diagram of a UI for continuing e-books on bookshelves in batches between a mobile phone and an e-reader in a cross-device manner according to some embodiments of this application;
FIG. 13 is a block diagram of a structure of a source display apparatus according to some embodiments of this application; and
FIG. 14 is a block diagram of a structure of a target display apparatus according to some embodiments of this application.

### DESCRIPTION OF EMBODIMENTS

The following describes implementations of embodiments in detail with reference to the accompanying drawings.

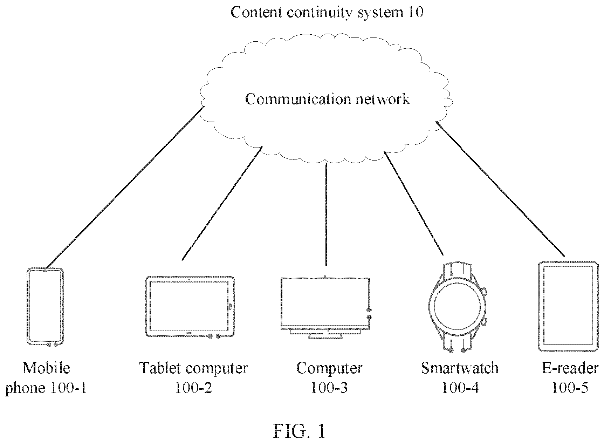

A screen identification method for distributed display provided in an embodiment of this application may be applied to a content continuity system 10 shown in FIG. 1. As shown in FIG. 1, the content continuity system 10 includes a plurality of electronic devices, for example, a mobile phone 100-1, a tablet computer 100-2, a computer 100-3, a smartwatch 100-4, and an e-reader 100-5.

In some scenarios, a user may need to switch display content such as an e-book, a web article, a game, or a video that is being displayed on one electronic device in the content continuity system 10 to another electronic device for display continuity. For example, the user reads an e-book through a reading application (application, app) of the mobile phone 100-1 on a way from work, and may want to switch the e-book to the e-reader 100-5 that is more suitable for reading and has an eye comfort function after going home, to continue to read the e-book. Alternatively, after going home, the user wants to switch a video played by a video app of the mobile phone 100-1 to the tablet computer 100-2 with a larger screen for play continuity. For another example, the user may browse a web article on a Weibo app at home through the tablet computer 100-2. When leaving home, the user may want to switch the web article on the Weibo app on the tablet computer 100-2 to the mobile phone 100-1 that is more portable, to continue to browse the web article.

In some embodiments, to enable one electronic device to continuously display content currently displayed on another electronic device, the user needs to first determine to select an electronic device as a continuity device, and then a to-be-continued electronic device passively establishes, through "OneHop" under an operation of the user, a communication connection with the electronic device selected by the user in advance, to perform content continuity.

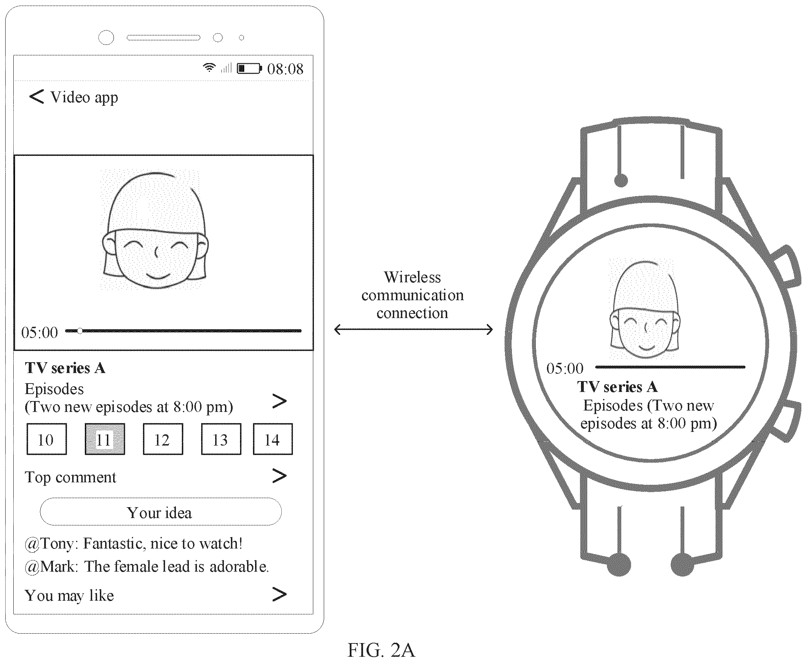

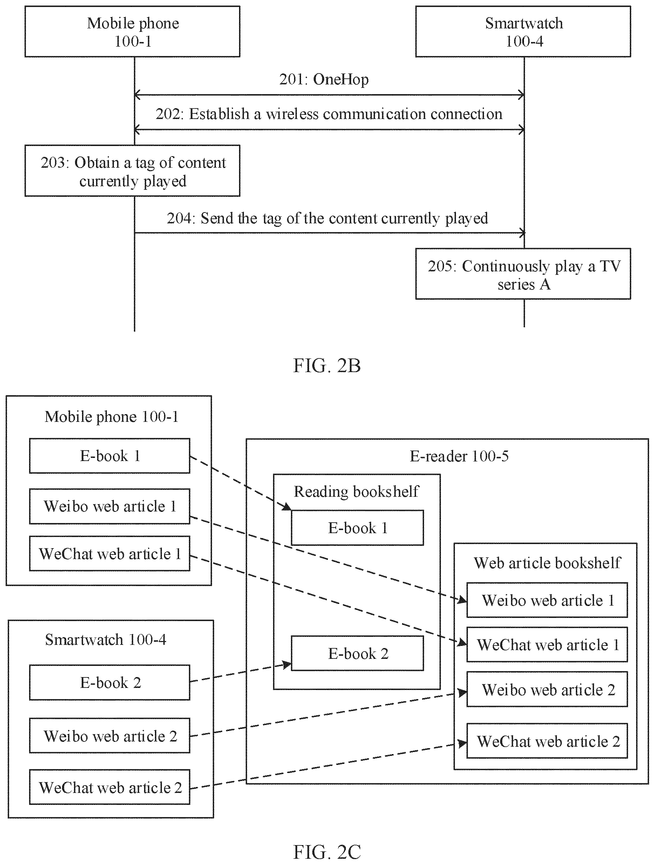

In some embodiments, the user watches a video through the mobile phone 100-1 on a way off work. However, the user finds that the mobile phone 100-1 is about to run out of power, and there is no charging device around the user to charge the mobile phone 100-1. In this case, the user wants to switch the video currently played by the mobile phone 100-1 to the smartwatch 100-4 carried by the user for play continuity. For example, if a TV series A currently played by the mobile phone 100-1 shown in FIG. 2A is switched to the smartwatch 100-4 for play continuity, the user needs to first select the smartwatch 100-4 as an electronic device for continuing playing the video, and then the user holds the mobile phone 100-1 to establish a communication connection between the mobile phone 100-1 and the smartwatch 100-4 through "OneHop", to perform video continuity. Specifically, as shown in FIG. 2B, a method in which the mobile phone 100-1 establishes a connection with the smartwatch 100-4 through "OneHop", to implement play continuity of the video through the smartwatch 100-4 includes the following steps.

Step 201: The mobile phone 100-1 establishes a connection with the smartwatch 100-4 through "OneHop".

For example, in some embodiments, a "OneHop" application is installed on the mobile phone 100-1, and a near field communication (near field communication, NFC) tag, for example, an NFC chip, is disposed on both the mobile phone 100-1 and the smartwatch 100-4. The "OneHop" application is an application that is capable of running for a long period of time in a form of a resident process after the mobile phone 100-1 is powered on, and that invokes the NFC tag of the mobile phone 100-1 when it is detected that the user triggers a "OneHop" function of the mobile phone 100-1.

Step 202: The mobile phone 100-1 establishes a wireless communication connection with the smartwatch 100-4.

For example, in some embodiments, when the mobile phone 100-1 is moved close to the smartwatch 100-4 by the user, the mobile phone 100-1 obtains, through the NFC tag, device information of the smartwatch 100-4 from the NFC tag of the smartwatch 100-4, for example, a media access control (Media Access Control, MAC) address, and establishes, based on the obtained MAC address, a wireless communication connection with the smartwatch 100-4 through Bluetooth, wireless-fidelity point-to-point (Wireless-Fidelity point-to-point, Wi-Fi P2P), or the like.

Step 203: The mobile phone 100-1 obtains a tag of content currently played.

For example, in some embodiments, after the mobile phone 100-1 establishes the wireless communication connection with the smartwatch 100-4, the mobile phone 100-1 may obtain a tag (tag) of currently specific display content from an application that is running in the foreground. The tag of the display content is used to record a location at which the user browses content currently displayed.

As shown in FIG. 2A, for example, the video app of the mobile phone 100-1 is playing the TV series A. The mobile phone 100-1 may request the video app to query an identifier of a play page of the TV series A, for example, a uniform resource identifier (Uniform Resource Identifier, URI) of the play page, and a play progress of the TV series A. For example, the play progress is the fifth minute of the eleventh episode. Further, still as shown in FIG. 2A, the mobile phone 100-1 may send the play progress and the identifier of the play page of the TV series A as the tag of the content currently displayed to the smartwatch 100-4.

Step 204: The mobile phone 100-1 sends the tag of the content currently played to the smartwatch 100-4.

For example, the mobile phone 100-1 sends, through Bluetooth, the play progress and the identifier of the play page of the TV series A shown in FIG. 2A as the tag of the content currently displayed to the smartwatch 100-4, so that the smartwatch 100-4 continuously plays, based on the tag, the TV series A currently played by the mobile phone 100-1.

Step 205: The smartwatch 100-4 continuously plays the TV series A.

For example, after the smartwatch 100-4 receives the tag of the TV series A shown in FIG. 2A, if a same video app is installed on the smartwatch 100-4, the video app of the smartwatch 100-4 may request a corresponding play page from a server based on the identifier of the play page and the play progress that are included in the tag, to continuously play the TV series A.

However, in embodiments shown in FIG. 2A and FIG. 2B, the mobile phone 100-1 passively establishes, through "OneHop" under the operation of the user, the communication connection with the smartwatch 100-4 selected by the user in advance, and then uses the smartwatch 100-4 to implement continuity of the content currently displayed on the mobile phone 100-1. As an electronic device for play continuity, the electronic device selected by the user may not be suitable for being used as the continuity device. For example, a screen of the smartwatch 100-4 selected by the user is small, and is not suitable for watching a video. Alternatively, the electronic device selected by the user may not be capable of implementing a content continuity function, leading to poor user experience.

To resolve the foregoing technical problem, in the screen identification method for distributed display provided in this application, a current application scenario of the electronic device is identified, to automatically select an electronic device more suitable for display continuity from other electronic devices discovered in a device network based on the identified application scenario, to improve user experience. For example, content currently displayed on the electronic device is identified, and it is determined that the electronic device currently displays an e-book or a web article, then it is determined that the current application scenario is a reading scenario, so that an electronic device with an eye comfort function is automatically recommended from a plurality of discovered electronic devices as an electronic device for continuity reading. For another example, the content currently displayed on the electronic device is identified, and it is determined that the electronic device currently displays a video, then it is determined that the current application scenario is a video play scenario, so that an electronic device with a strong display capability, for example, a large screen and high resolution, is automatically recommended from the plurality of discovered electronic devices as an electronic device for video play continuity.

In addition, further, in the distributed display solution provided in this application, in the reading scenario, that is, when the content currently displayed on the electronic device is the e-book or the web article, the electronic device as the continuity device can further perform classified management on e-books or web articles sent by another electronic device, generate a corresponding reading bookshelf corresponding to the e-books, and generate a corresponding web article bookshelf corresponding to the web articles, to provide a better continuity reading service for the user and improve user experience.

For example, in the embodiment shown in FIG. 2C, in the reading scenario, both the mobile phone 100-1 and the smartwatch 100-4 automatically recommend the e-reader 100-5 as the electronic device for continuity reading, and both the mobile phone 100-1 and the smartwatch 100-4 may continuously display the e-book or web article currently displayed through the automatically recommended e-reader 100-5.

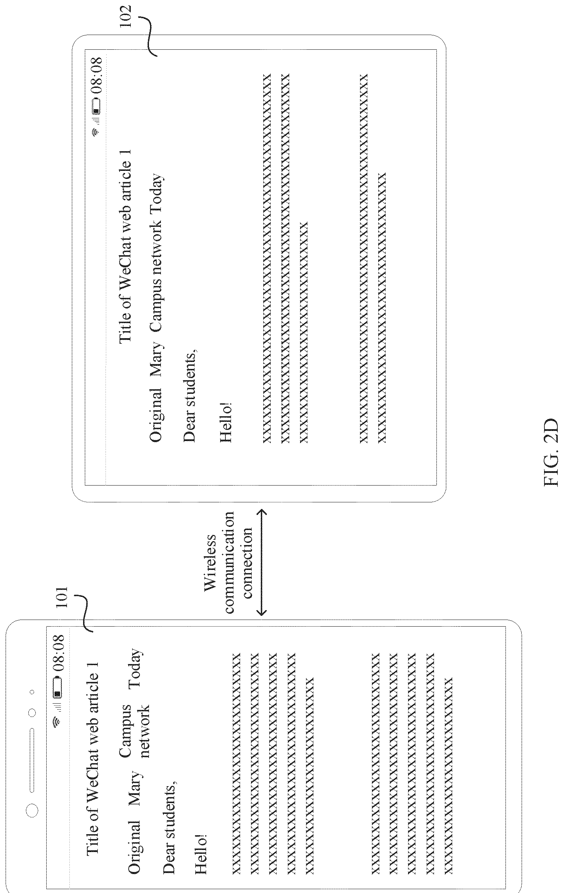

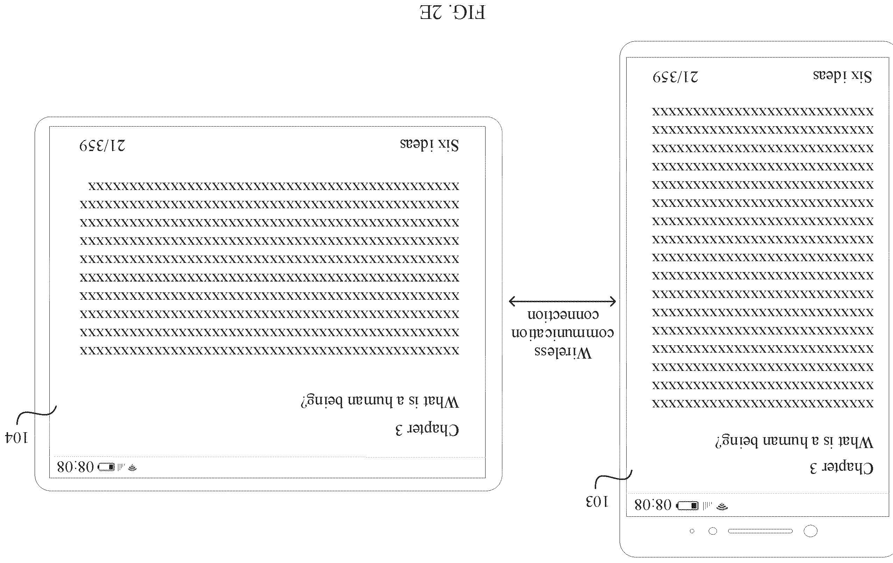

Specifically, for example, in the embodiment shown in FIG. 2D, the mobile phone 100-1 continuously displays a WeChat web article 1 displayed on an interface 101 through the e-reader 100-5 automatically recommended by the mobile phone 100-1. In this case, content displayed on an interface 102 of the e-reader 100-5 is content of the WeChat web article 1, that is, the content displayed on the interface 102 of the e-reader 100-5 is consistent with content displayed on the interface 101 of the mobile phone 100-1. For another example, in the embodiment shown in FIG. 2E, the mobile phone 100-1 continuously displays an e-book 1 displayed on an interface 103 through the e-reader 100-5 automatically recommended by the mobile phone 100-1. In this case, content displayed on an interface 104 of the e-reader 100-5 is content of the e-book 1, that is, the content displayed on the interface 104 of the e-reader 100-5 is consistent with content displayed on the interface 103 of the mobile phone 100-1.

In addition, the e-reader 100-5 may further respectively add the web article and the e-book that are continued from the mobile phone 100-1 to the web article bookshelf and the reading bookshelf that are generated by the e-reader 100-5, to enable the user to select a corresponding web article from the web article bookshelf or select a corresponding e-book from the reading bookshelf for reading when needed.

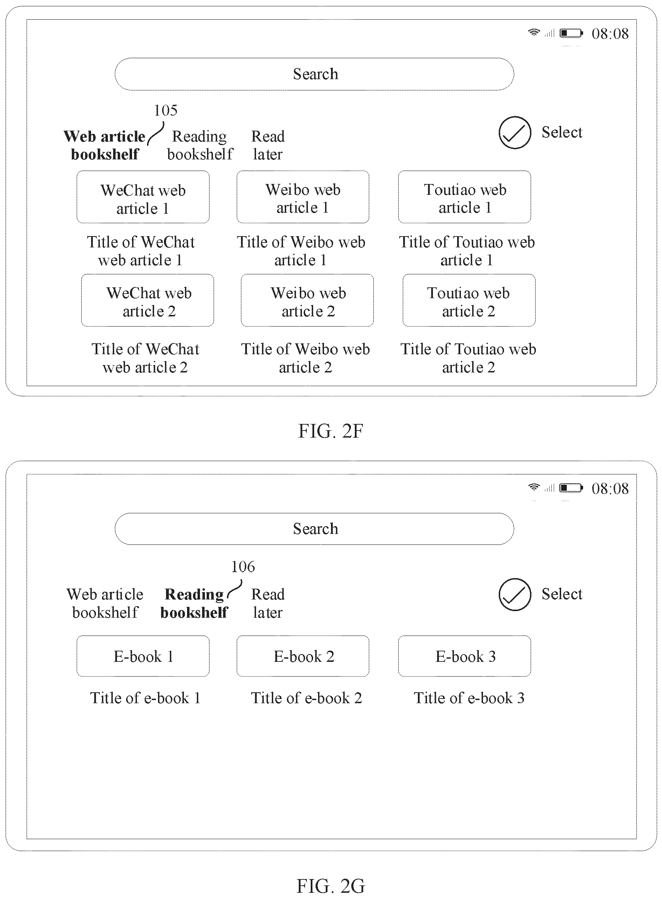

Specifically, for example, in the embodiment shown in FIG. 2F, the e-reader 100-5 adds the WeChat web article 1 continued from the mobile phone 100-1 to a web article bookshelf 105. For another example, in the embodiment shown in FIG. 2G, the e-reader 100-5 adds the e-book 1 continued from the mobile phone 100-1 to a reading bookshelf 106, to enable the user to select a web article or an e-book to read when needed. The following describes how to perform continuity in detail.

In addition, according to the distributed display solution provided in this application, not only can play continuity of video content be implemented, but also display continuity of content such as the e-book, the web article, and an office file be implemented, delivering a wide application scope.

It should be noted that an electronic device to which the distributed display solution provided in this application is applicable may be any electronic device having a display, including but not limited to a mobile phone, an e-reader, a tablet computer, a smart television, a notebook computer, an ultra-mobile personal computer (Ultra-mobile Personal Computer, UMPC), a handheld computer, a netbook, a personal digital assistant (Personal Digital Assistant, PDA), a wearable electronic device, a vehicle-mounted device, a virtual reality device, or the like. This is not limited in this embodiment of this application.

For ease of description, the following describes in detail the distributed display solution provided in this application by using an example in which content displayed on a mobile phone 100-1 currently used by the user is continuously displayed on another electronic device.

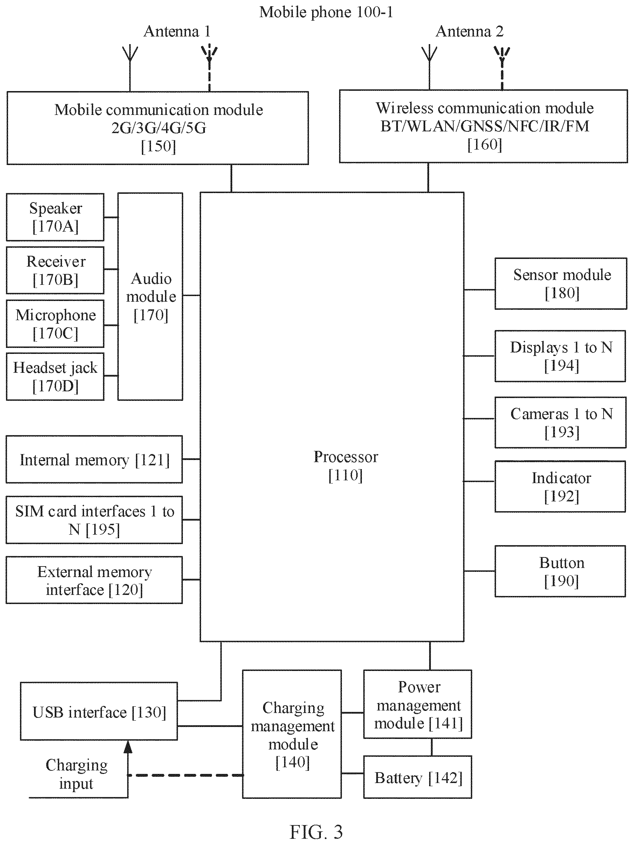

The following first describes, with reference to FIG. 3, a diagram of a hardware structure of the mobile phone 100-1 that can perform the distributed display solution provided in this application. As shown in FIG. 3, the mobile phone 100-1 may include a processor 110, an external memory interface 120, an internal memory 121, a universal serial bus (universal serial bus, USB) interface 130, a subscriber identification module (Subscriber Identification Module, SIM) card interface 195, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a display 194, a camera 193, an indicator 192, a button 190, and the like.

It may be understood that the structure shown in this embodiment of this application does not constitute a specific limitation on the mobile phone 100-1. In some other embodiments of this application, the mobile phone 100-1 may include more or fewer components than those shown in the figure, combine some components, split some components, or have different component arrangements. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The processor 110 may further be provided with a memory for storing instructions and data. In some embodiments, the memory in the processor 110 is a cache memory. The memory may store instructions or data that have just been used or used repeatedly by the processor 110. If the processor 110 needs to use the instructions or the data again, the processor 110 may directly invoke the instructions or the data from the memory. This avoids repeated access and reduces waiting time of the processor 110, improving system efficiency.

In some embodiments, the processor 110 is configured to: identify content currently displayed on the mobile phone 100-1, and match an appropriate electronic device as a continuity device based on the identified content currently displayed, to parse the content currently displayed on the mobile phone 100-1.

A wireless communication function of the mobile phone 100-1 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 100-1 may be configured to cover one or more communication frequency bands. Different antennas may be multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that is applied to the mobile phone 100-1 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and then transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the mobile phone 100-1 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like.

The mobile phone 100-1 implements a display function through the GPU, the display 194, the application processor, and the like. The GPU is a microprocessor for image processing and is connected to the display 194 and the application processor. The GPU is configured to perform mathematical and geometric computation for graphic rendering. The processor 110 may include one or more GPUs that execute program instructions to generate or change display information.

The display 194 displays images, videos, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the display 194 displays a user interface of a foreground application of the mobile phone 100-1.

The mobile phone 100-1 may implement an image shooting function through the ISP, the camera 193, the video codec, the GPU, the display 194, the application processor, and the like.

The ISP may be configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a still image or a video.

The external memory interface 120 may be configured to connect to an external memory card, to extend a storage capability of the mobile phone 100-1. The external memory card communicates with the processor 110 through the external memory interface 120, to implement a data storage function. For example, files such as music and a video are stored in the external memory card.

The internal memory 121 may be configured to store computer executable program code, and the executable program code includes instructions. The processor 110 runs the instructions stored in the internal memory 121, to perform various function applications of the mobile phone 100-1 and data processing.

The mobile phone 100-1 may implement an audio function like music play and recording through the audio module 170, the speaker 170A, the receiver 170B, the microphone 170C, the headset jack 170D, the application processor, and the like.

The audio module 170 is configured to convert digital audio information into an analog audio signal output, and if further configured to convert an analog audio input into a digital audio signal. The audio module 170 may be further configured to encode and decode the audio signal. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The mobile phone 100-1 may be used to listen to music or answer a call in a hands-free mode through the speaker 170A.

The receiver 170B, also referred to as an "earpiece", is configured to convert an audio electrical signal into a sound signal. When a call is answered or voice information is received by using the mobile phone 100-1, the receiver 170B may be put close to a human ear to listen to voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the mobile phone 100-1. In some other embodiments, two microphones 170C may be disposed in the mobile phone 100-1, to collect a sound signal and further implement a noise reduction function. In some other embodiments, three, four, or more microphones 170C may be alternatively disposed in the mobile phone 100-1, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

In addition, the mobile phone 100-1 may further include the charging management module 140, the power management module 141, the battery 142, the button 190, the indicator 192, one or more SIM card interfaces, and the like. This is not limited in this embodiment of this application.

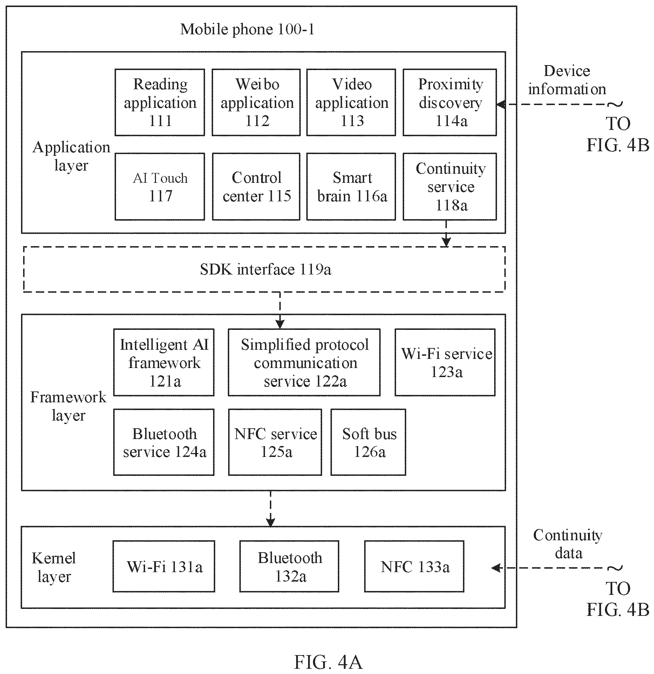

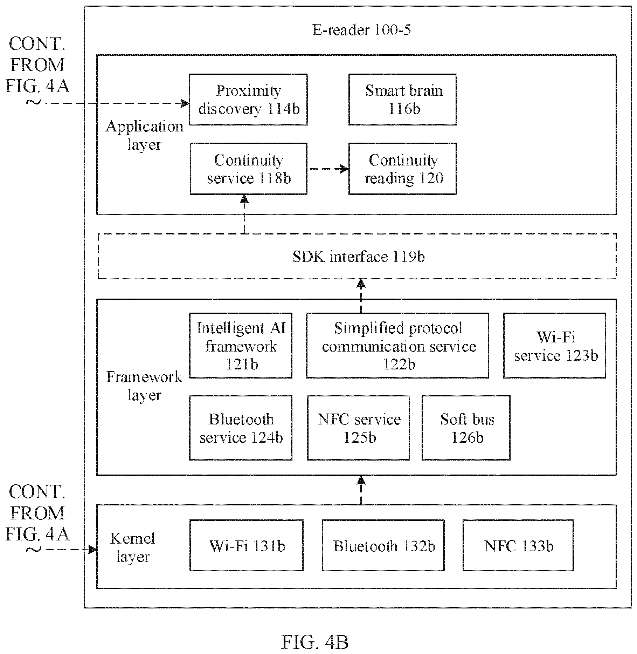

A software system of the mobile phone 100-1 shown in FIG. 3 may use a layered architecture, an event-driven architecture, a microkernel architecture, a microservice architecture, or a cloud architecture. In this embodiment of this application, an **Android**^{™} operating system with the layered architecture shown in FIG. 4A and FIG. 4B is used as an example to describe software structures of the mobile phone 100-1 and the e-reader 100-5 that is used as a continuity device. In the layered architecture, software is divided into several layers, and each layer has a clear role and responsibility. The layers communicate with each other through a software interface.

In the embodiment shown in FIG. 4A and FIG. 4B, the **Android**^{™} operating system is divided into an application layer, a framework layer, and a kernel layer from top to bottom.

The application layer may include a series of application packages. Specifically, as shown in FIG. 4A and FIG. 4B, the mobile phone 100-1 applicable to the content continuity technical solution provided in this application includes applications such as a reading application 111, aWeibo application 112, a video application 113, proximity discovery 114a, AI Touch 117, a control center 115, a smart brain 116a, and a continuity service 118a. It may be understood that an application layer of the mobile phone 100-1 may further include other apps such as call, memo, browser, contact, camera, gallery, calendar, map, Bluetooth, music, and messaging.

The reading application 111 of the mobile phone 100-1 is an app configured to: read an e-book, and provide an information source of book content.

The Weibo application 112 is an app configured to: browse web page content of news or Weibo, and provide an information source of the web page content.

The video application 113 is an app configured to: browse streaming media video content, and provide a user with video download and play functions.

The proximity discovery 114a of the mobile phone 100-1 is configured to: discover, in a device network, another electronic device with which a communication connection can be established around the mobile phone 100-1, and obtain information about the discovered electronic device, for example, to obtain device information including a name, device capabilities, a device type, a MAC address, and the like of the discovered electronic device. For example, in some embodiments, after Bluetooth of the mobile phone 100-1 is enabled, basic information of a plurality of connectable devices is displayed, for example, device models of the plurality of connectable devices are displayed. After the mobile phone 100-1 determines a current application scenario through the AI Touch 117, and the mobile phone 100-1 recommends an electronic device suitable for continuity through the smart brain 116a with reference to the determined application scenario, the control center 115 of the mobile phone 100-1 displays the recommended electronic device for a user to confirm. After determining to connect to the recommended electronic device, the proximity discovery 114a of the mobile phone 100-1 directly obtains key information such as capabilities and a MAC address of the electronic device from the recommended electronic device. The device capabilities may include a computing capability, a sound pickup capability, a security capability, a display capability, a play capability, a photographing capability, a storage capability, and the like.

For example, the device information may further include authentication information used for identity authentication when the device establishes a wireless communication connection with the another electronic device. For example, the authentication information may be a token, a pre-shared key (pre-shared key, PSK), a device serial number, or the like that is used when the wireless communication connection with the mobile phone 100-1 is established. This is not limited in this embodiment of this application.

The AI Touch 117 of the mobile phone 100-1 is configured to: extract content currently displayed on the mobile phone 100-1, and identify the extracted content. For example, a text and content on a foreground interface are extracted, and a text, an image, and a web page information element are intelligently analyzed, to enable the smart brain 116a of the mobile phone 100-1 to determine, from discovered devices based on an analysis result, a continuity device that is more suitable for continuously displaying the content currently displayed on the mobile phone 100-1.

The smart brain 116a of the mobile phone 100-1 is configured to: sort the discovered devices based on the identified application scenario, recommend an electronic device corresponding to the current application scenario from the discovered devices, and send a finally recommended device to the control center 115 for UI presentation.

The control center 115 of the mobile phone 100-1 is configured to display a list of discovered surrounding devices, information about the recommended device, and a continuity status of the mobile phone 100-1, for example, prompt information that indicates that the continuity starts or the continuity succeeds.

The continuity service 118a of the mobile phone 100-1 is configured to establish a service channel for signaling transmission between the mobile phone 100-1 and the recommended continuity device, for example, a Bluetooth channel and a Wi-Fi P2P channel. The Bluetooth channel is used to transmit instructions and content with a small data volume. The Wi-Fi P2P channel is used to transmit a file or large data with a large data volume. In addition, the continuity service 118a of the mobile phone 100-1 is further configured to identify an application scenario based on an app corresponding to a foreground display interface of the mobile phone 100-1. If a unique and specific application scenario can be determined through the app, the continuity service 118a of the mobile phone 100-1 may send the content currently displayed on the mobile phone 100-1 to the recommended electronic device for display continuity.

For example, in some embodiments, the reading application 111 of the mobile phone 100-1 registers a listening service with the continuity service 118a of the mobile phone 100-1. In this case, the continuity service 118a of the mobile phone 100-1 detects, through listening, that the app corresponding to the foreground display interface of the mobile phone 100-1 is the reading application 111, and may determine that the current application scenario is an e-book reading scenario. Then, the continuity service 118a of the mobile phone 100-1 encapsulates e-book content displayed on the current interface into JSON data (a text-based lightweight data format) (briefly referred to as e-book JSON data), and sends the e-book JSON data to the recommended continuity electronic device, to enable the electronic device to request corresponding page content from a continuity reading server based on the received e-book JSON data, to display the requested page content and implement a continuity reading function.

In some embodiments, the e-book JSON data includes an identifier of the e-book, a progress of reading the e-book, a chapter identifier, a play progress of listening to the e-book, a chapter identifier of listening to the e-book, a file name of a local e-book, a name of a target application for continuity transfer, and the like.

For example, in some embodiments, the e-book JSON data may be defined as a format including a plurality of fields shown in Table 1.

**Table 1**

| Field name | Description |
|---|---|
| "onehop_data_type" | 7 |
| "onehop_receive_type" | 2 |
| "diff_package_name" | Name of a target package for continuity transfer. If this field does not exist, the continuity is performed on packages with a same name |
| "diff_app_name" | Name of a target application for continuity transfer, which facilitates download from an application market |
| "file_path" | File path: List<Uri>, including a plurality of books. This field does not exist in online continuity |
| "reader_sp" | "zhangyue\|dianzhong\|alibaba\|yuewen\|huawei" |
| "reader_book_id" | "Identifier of a book being read" |
| "reader_chapter_id" | "Identifier of a chapter of a book being read" |
| "reader_book_file_name" | "File name of a local e-book" |
| "reader_progress" | "Reading progress, whose format is defined by a reader" |
| "reader_tts_progress" | "tts play progress, whose format is defined by a reader" |
| "reader_tts_progress" | "tts play progress, whose format is defined by a reader" |
| "player_sp" | "zhangyue\|dianzhong\|alibaba\|yuewen\|huawei" |
| "player_book_id" | "Play an identifier of book listening" |
| "player_chapter_id" | "Play an identifier of a chapter of book listening" |
| "player_progress" | "Play progress, in seconds" |

It may be understood that a specific format of the e-book JSON data and meanings of the fields in the e-book JSON data may be determined based on an actual situation. The format of the e-book JSON data shown in Table 1 is merely an illustrative example. This is not limited in this application.

In addition, it should be noted that some apps installed on the mobile phone 100-1 may integrate an open continuity transfer engine SDK (Software Development Kit, software development kit) to register a continuity service capability with the continuity service 118a, to connect content of an app that is in the mobile phone 100-1 and that has registered the continuity service to another electronic device for continuity processing.

Still refer to FIG. 4A and FIG. 4B. An application layer of the e-reader 100-5 applicable to the content continuity technical solution provided in this application includes applications such as proximity discovery 114b, a smart brain 116b, a continuity service 118b, and continuity reading 120.

The continuity service 118b of the e-reader 100-5 is configured to: receive continuity data from another electronic device, and send the received continuity data to some apps of the e-reader 100-5 for display continuity. For example, in some embodiments, in a reading scenario, the continuity service 118b of the e-reader 100-5 is configured to: receive the continuity data from the another electronic device, and send the received continuity data to the continuity reading 120 of the e-reader 100-5, to perform classified management on e-books or web articles that need to be continuously displayed, and continuously display the e-books or web articles. In some embodiments, the continuity service 118b of the e-reader 100-5 is configured to: receive the continuity data from the another electronic device, and send the received continuity data to a video application (not shown) of the e-reader 100-5, to continuously play a video. In some embodiments, the continuity service 118b of the e-reader 100-5 is further configured to send device information of the e-reader 100-5 to an electronic device that recommends and selects the e-reader 100-5 as the continuity device sequentially through the smart brain 116b and the proximity discovery 114b.

The proximity discovery 114b of the e-reader 100-5 is configured to: send the device information of the e-reader 100-5 to an electronic device that uses the e-reader 100-5 as a continuity device, or receive, from another electronic device, device information sent by the another electronic device.

The smart brain 116b of the e-reader 100-5 is configured to: obtain the device information of the e-reader 100-5 from the continuity service 118b of the e-reader 100-5, and send the device information to the electronic device that recommends and selects the e-reader 100-5 as the continuity device through the proximity discovery 114b of the e-reader 100-5.

The continuity reading 120 of the e-reader 100-5 is an app capable of implementing a cross-device continuity reading function, and is configured to: directly generate a web page or an html interface on a display interface of the e-reader 100-5 based on the continuity data received from the continuity service 118b of the e-reader 100-5, to continuously display an e-book or a web article, or add e-books or web articles to a "read later" function menu of the continuity reading 120, to enable the user to click the read later menu and select an e-book or a web article to read from the menu when needed, to implement the read later function.

In addition, the continuity reading 120 of the e-reader 100-5 is further configured to: perform classified management on e-books or web articles for continuity reading, and generate a reading bookshelf and a web article bookshelf. The reading bookshelf is used to manage e-books, for example, to display covers and titles of e-books that are being continued currently and e-books that have been continued historically. The web article bookshelf is used to manage web articles, for example, to display titles of web articles that are being continued currently and web articles that have been continued historically. In this way, the user can view the e-books or the web articles that have been continued. For example, the web article bookshelf and the reading bookshelf are implemented in the continuity reading 120 of the e-reader 100-5 through a RecyclerView control in the **Android**^{™} operating system.

In addition, the continuity reading 120 of the e-reader 100-5 may further provide functions including page scrolling, directory display, progress switching, font size adjustment, theme switching, text selection, copying, and the like.

In addition, it may be understood that the continuity reading 120 is merely an example name of an app capable of implementing the foregoing described functions including continuity reading, read later, bookshelf management, and the like. In some other embodiments, the continuity reading 120 may also be referred to as a distributed bookshelf. This is not limited in this application.

An SDK interface 119a is an application programming interface (application programming interface, API) used for a framework layer that is controlled and managed by an application layer app and the continuity service 118a of the mobile phone 100-1. The SDK interface 119a may include an API interface for obtaining an identifier (for example, an application package name) of a foreground application, a Bluetooth connection, a Wi-Fi P2P connection, and the like of the mobile phone 100-1. An SDK interface 119b is an application programming interface (application programming interface, API) used for a framework layer that is controlled and managed by an application layer app and the continuity service 118b of the e-reader 100-5. The SDK interface 119b is similar to the SDK interface 119a, and is not described herein again.

The framework layer provides programming frameworks for applications at the application layer. An application framework layer includes some predefined functions. For example, a framework layer of the mobile phone 100-1 includes an intelligent AI framework 121a, a simplified protocol communication service 122a, a Wi-Fi service 123a, an NFC service 125a, a Bluetooth service 124a, a soft bus 126a, and the like.

The intelligent AI framework 121a of the mobile phone 100-1 is configured to: provide a computing service for the AI Touch 117 and the smart brain 116a at the application layer, for example, provide an application scenario identification service for the AI Touch 117; and provide a service for the smart brain 116a to make a decision according to a preset rule, to recommend a suitable continuity device based on the application scenario.

The simplified protocol communication service 122a is configured to provide a user-defined simplified protocol interface, to quickly and efficiently transmit instructions and data, and is a basic application layer protocol and a capability provider for a continuity (transfer) service.

The Wi-Fi service 123a is configured to provide Wi-Fi configuration information such as a networking connection Wi-Fi P2P IP address/group/channel/SSID for Wi-Fi 131a.

The NFC service 125a is configured to provide configuration information such as a networking connection tag for NFC 133a.

The Bluetooth service 124a is configured to provide Bluetooth configuration information such as a networking connection Bluetooth MAC address/session (session) ID for Bluetooth 132a.

The soft bus 126a is configured to: implement a unified distributed communication capability between near field devices, and provide device discovery and a transmission interface that do not distinguish links, so that a device can be quickly discovered and continued, and a task can be distributed and data can be transmitted efficiently.

Still refer to FIG. 4A and FIG. 4B. A framework layer of the e-reader 100-5 includes an intelligent AI framework 121b, a simplified protocol communication service 122b, a Wi-Fi service 123b, an NFC service 125b, a Bluetooth service 124b, a soft bus 126b, and the like. Modules at the framework layer of the e-reader 100-5 are similar to modules at the framework layer of the mobile phone 100-1. For specific meanings, refer to the foregoing descriptions of the modules at the framework layer of the mobile phone 100-1, and details are not described herein again.

The kernel layer is a layer between hardware and software. For example, a kernel layer of the mobile phone 100-1 includes the Wi-Fi 131a, the Bluetooth 132a, and the NFC 133a. A kernel layer of the e-reader 100-5 includes Wi-Fi 131b, Bluetooth 132b, and NFC 133b.

The Wi-Fi 131a and the Wi-Fi 131b mean a driver and Wi-Fi firmware of a Wi-Fi chip, and are used to transmit continuity data.

The NFC 133a and the NFC 133b mean a driver and NFC firmware of an NFC chip, and are used to transmit continuity data.

The Bluetooth 132a and the Bluetooth 132b mean a driver and Bluetooth firmware of a Bluetooth chip, and are used to transmit continuity data.

In addition, in some embodiments, the framework layers of the mobile phone 100-1 and the e-reader 100-5 may further include an authentication framework (not shown in the figure). The authentication framework is configured to provide a function of pulling a specific application permission entry from a cloud side based on cloud and local configuration data, to determine whether the specific application permission entry has a specific capability permission. In some embodiments, the kernel layers of the mobile phone 100-1 and the e-reader 100-5 may further include a distributed file system (not shown in the figure), and the mobile phone 100-1 and the e-reader 100-5 may further transmit data to each other through the distributed file system.

The following describes in detail the technical solutions of this application by using an example in which the mobile phone 100-1 discovers and selects a continuity device in the diagram of the content reading scenario shown in FIG. 1, with reference to the diagram of the hardware structure of the mobile phone 100-1 shown in FIG. 3 and the diagram of the layered software architecture shown in FIG. 4A and FIG. 4B.

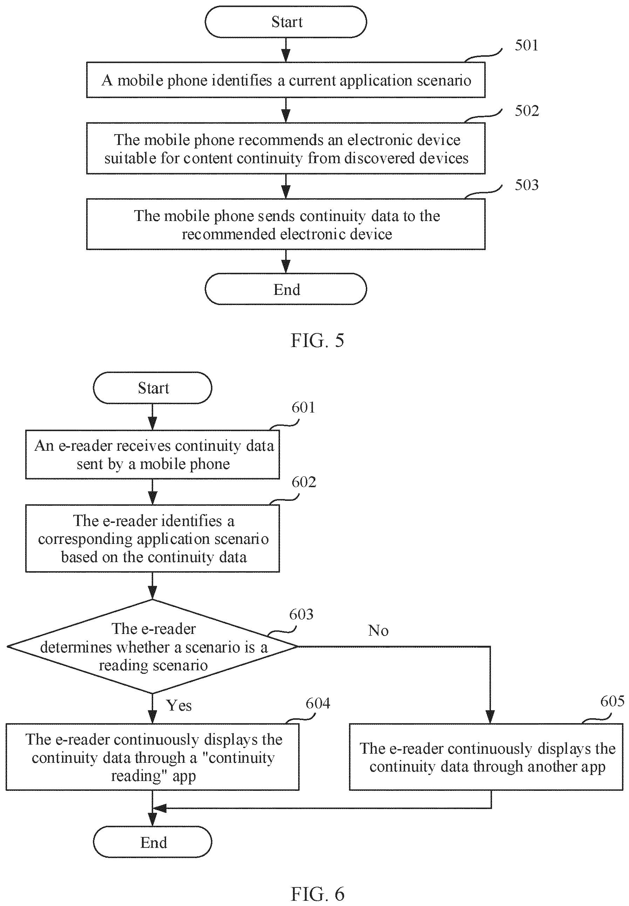

First, the flowchart shown in FIG. 5 is used as an example to describe a specific process in which the mobile phone 100-1 discovers electronic devices, identifies a scenario based on content currently displayed on the mobile phone 100-1, and recommends an electronic device suitable for continuity based on the identified scenario. Specifically, as shown in FIG. 5, the process includes the following steps.

Step 501: The mobile phone 100-1 identifies a current application scenario.

In some embodiments, to quickly determine the current application scenario, the mobile phone 100-1 may preliminarily identify the current application scenario based on a foreground application. When the mobile phone 100-1 is capable of identifying the determined application scenario based on the foreground application, step 502 is performed. When the mobile phone 100-1 is not capable of identifying the determined application scenario based on the foreground application, the scenario is further identified based on the content currently displayed, and when the mobile phone 100-1 determines the current application scenario based on the content currently displayed, step 502 is performed.

For example, after detecting that the continuity service 118a is enabled, the mobile phone 100-1 listens to an app corresponding to the foreground application through the continuity service 118a at the application layer, and then identifies the application scenario through the app obtained through listening. The foreground application is an application corresponding to a current display interface of the mobile phone 100-1.

It may be understood that, in some embodiments, after the continuity service 118a of the mobile phone 100-1 detects the foreground application, for some apps, the application scenario is uniquely determined. For example, for a reading app, a user can only read an e-book through the reading app, and cannot chat, watch a video, or read a web article through the reading app. In some embodiments, the mobile phone 100-1 stores a trustlist of apps corresponding to the reading scenario, and the trustlist includes identification information of various reading apps, for example, a WeChat reading app and a palm reading app. When learning, through listening, that an app corresponding to a current display interface is in the trustlist, the mobile phone 100-1 determines that the current application scenario is the reading scenario.

However, for some other apps, the application scenario cannot be determined. For example, a WeChat app has a plurality of views such as a chat session interface, a Moments display interface, a web article page entered through a network link, and the like. The content currently displayed on the mobile phone 100-1 needs to be parsed to further determine which interface among the chat session interface, the Moments display interface, the web article page, and the like is currently displayed on the mobile phone 100-1, to obtain a uniquely determined application scenario.

For example, in some embodiments, the AI Touch 117 at the application layer of the mobile phone 100-1 extracts and parses content of a current display interface through invoking an intelligent AI framework at the framework layer, to further determine a uniquely determined application scenario based on the content currently displayed.

For example, in some embodiments, the AI Touch 117 of the mobile phone 100-1 takes a screenshot of the content currently displayed, processes the screenshot to obtain a file in an mht format (a file format) including all elements in the screenshot, and then parses the file in the mht format to further determine a current application scenario.

In addition, it should be noted that, in some embodiments, when an app has registered a continuity service with the continuity service 118a, the app supports a continuity service function. When the continuity service 118a is enabled, if the mobile phone 100-1 currently displays a display interface of the app, continuity to the display interface of the app may be implemented. For example, if the WeChat reading app has registered a continuity service with the continuity service 118a, the WeChat reading app supports the continuity service function. When the continuity service 118a is enabled, if the mobile phone 100-1 currently displays a display interface of the WeChat reading app, continuity to the display interface of the WeChat reading app may be implemented.

Step 502: The mobile phone 100-1 recommends an electronic device suitable for content continuity from the discovered devices.

To be specific, when the mobile phone 100-1 determines the current application scenario, the mobile phone 100-1 may recommend the electronic device suitable for content continuity with reference to the determined application scenario.

For example, in some embodiments, when the mobile phone 100-1 determines that the current application scenario is video play, the mobile phone 100-1 may recommend the electronic device suitable for continuously playing a video from the discovered devices. For another example, in some embodiments, when the mobile phone 100-1 determines that the current application scenario is e-book reading, the mobile phone 100-1 may recommend, from the discovered devices, the electronic device suitable for continuously displaying the e-book. Therefore, in different application scenarios, electronic devices that better meet the application scenarios are recommended in a personalized manner, to improve user experience.

In some embodiments, after the Bluetooth of the mobile phone 100-1 is enabled, basic information of a plurality of connectable devices is displayed, for example, a device name, a device model, device capability information, and the like. The device capability information is information that represents a computing capability, a sound pickup capability, a security capability, a display capability, a play capability, a photographing capability, a storage capability, and the like of the device. After obtaining the device capability information of the connectable devices, the mobile phone 100-1 may determine an application scenario suitable for a connected device. The mobile phone 100-1 determines the current application scenario through the AI Touch 117, and the mobile phone 100-1 recommends an electronic device suitable for continuity through the smart brain 116a with reference to the determined application scenario. The smart brain 116a may determine a recommended electronic device according to a preset rule. For example, the preset rule is: When the current application scenario is a reading scenario, an electronic device suitable for reading, for example, an electronic device with an eye comfort function, is recommended from the discovered electronic devices as a continuity electronic device. Alternatively, when the current application scenario is a game scenario, an electronic device suitable for game play, for example, an electronic device with a high computing capability, is recommended from the discovered electronic devices as a continuity electronic device. Alternatively, when the current application scenario is a video scenario, an electronic device suitable for video play, for example, an electronic device with a large screen, is recommended from the discovered electronic devices as a continuity electronic device.

Step 503: The mobile phone 100-1 sends the continuity data to the recommended electronic device, to enable the electronic device to continuously display the content currently displayed on the mobile phone 100-1.

In some embodiments, after the smart brain 116a of the mobile phone 100-1 recommends the electronic device suitable for continuity with reference to the current application scenario, the control center 115 of the mobile phone 100-1 displays the recommended electronic device for a user to confirm. After a to-be-continued electronic device is determined, the control center 115 of the mobile phone 100-1 requests device information from the recommended electronic device through the smart brain 116a and the proximity discovery 114a. After obtaining the device information including a MAC address, a token (token) used for establishing a wireless communication connection, a pre-shared key (pre-shared key, PSK), a device serial number, and the like of the recommended electronic device, the control center 115 of the mobile phone 100-1 starts the continuity service 118a of the mobile phone 100-1, and then sends the continuity data to the recommended electronic device, to enable the electronic device to continuously display the content currently displayed on the mobile phone 100-1.

In some embodiments, when an online web article currently displayed on the mobile phone 100-1 is continuously displayed on the recommended electronic device, the mobile phone 100-1 may further encapsulate web article data such as a URI, a web article title, a parsing source, parsing time, a server source, and an article integrity check identifier corresponding to the online web article currently displayed into JSON data (briefly referred to as web article JSON data), and send the web article JSON data as continuity data to a recommended continuity electronic device, to enable the recommended continuity electronic device to request corresponding web article content from the server based on the received continuity data, and to enable the continuity electronic device to perform display continuity.

In some embodiments, when an offline web article currently displayed on the mobile phone 100-1 is continuously displayed on the recommended electronic device, the mobile phone 100-1 may send web article JSON data such as a URI, a web article title, a parsing source, parsing time, a server source, and an article integrity check identifier corresponding to the offline web article currently displayed, and an mht file corresponding to the web article as continuity data to a recommended continuity electronic device, to enable the recommended continuity electronic device to continuously display the offline web article based on the received continuity data.

For example, in some embodiments, the web article JSON data may be defined as a format including various fields shown in Table 2.

**Table 2**

| Field name | Description |
|---|---|
| title | Article title |
| originURI | Article link |
| thumbnailPath | Absolute path of an article thumbnail |
| htmlP ath | Absolute path 1 after article parsing |
| localURI | Absolute path 2 after article parsing |
| createdTime | Article parsing time |
| comeFrom | Parsing source |
| description | Other description information |
| uniqueId | Unique article identifier |
| imageUri | Article thumbnail link |
| source | Server source |
| packageName | Source package name |
| htmlDigest | Article integrity check identifier |
| thumbnailUri | URI after an article thumbnail is authorized |
| htmlSourceFileUri | URI array after an article parsing file is authorized |
| htmlFileName | Article folder name |
| htmlFileParentPath | Root directory of an article folder |

It may be understood that a specific format of the web article JSON data and meanings of the fields in the web article JSON data may be determined based on an actual situation. The format of the web article JSON data shown in Table 2 is merely an illustrative example. This is not limited in this application.

In some embodiments, when the content currently displayed on the mobile phone 100-1 is an online e-book, the mobile phone 100-1 may further encapsulate an identifier, a chapter structure, a reading progress, and the like of the e-book currently displayed into e-book JSON data, and send the e-book JSON data as continuity data to a recommended continuity electronic device, to enable the recommended continuity electronic device to call back continuity reading 120 of the continuity electronic device based on the received JSON data. After parsing the JSON data, the continuity reading 120 requests the continued e-book from a server of the continuity reading 120, to enable the continuity electronic device to perform display continuity.

In some embodiments, when the content currently displayed on the mobile phone 100-1 is an offline e-book, the mobile phone 100-1 needs to encapsulate an identifier, a chapter structure, a reading progress, and the like of the e-book currently displayed into e-book JSON data, and send the e-book JSON data and a file of the e-book downloaded to the mobile phone 100-1 as continuity data to a recommended continuity electronic device, to enable the continuity electronic device to import the file of the e-book into a reading bookshelf of the continuity reading 120, and continuously display the e-book content currently displayed on the mobile phone 100-1, or add progress information to the reading bookshelf based on the reading progress carried in the e-book JSON data.

In some embodiments, when downloaded and undownloaded e-books on a reading app bookshelf are currently displayed on the mobile phone 100-1, the mobile phone 100-1 may: send a plurality of files of the downloaded e-books and corresponding e-book JSON data as continuity data to a recommended continuity electronic device; or send e-book JSON data corresponding to a plurality of undownloaded e-books as continuity data to a recommended continuity electronic device; or send both a plurality of files of the downloaded e-books and corresponding e-book JSON data and e-book JSON data corresponding to a plurality of undownloaded e-books as continuity data to a recommended continuity electronic device.

In some embodiments, to enable the continuity electronic device to obtain a corresponding e-book or web article in the server of the continuity reading 120 based on the continuity data, a server corresponding to the reading app currently displayed on the mobile phone 100-1 and the server of the continuity reading 120 of the continuity electronic device need to be capable of accessing each other, that is, sharing resources.

In some embodiments, in addition to sending the URI and the data and the file in the JSON form to the recommended continuity electronic device, the mobile phone 100-1 may further send a picture, a video, audio, a text, or the like included in a current application interface to the recommended continuity electronic device. In this way, when the continuity electronic device continuously displays a corresponding interface, the foregoing content such as the picture, the video, the audio, or the text does not need to be additionally downloaded.

In addition, the continuity data may further include authentication data of an app corresponding to content currently displayed, for example, an account, a password, or the like, to enable the continuity electronic device to have corresponding permission to request content that needs to be continuously displayed from a server of the app corresponding to the content currently displayed.

In some embodiments, a server of a first application that is installed on the mobile phone 100-1 and that is used to open target content that needs to be continuously displayed and a server of a second application that is installed on the continuity electronic device and that continuously displays the target content have mutual access permission, to enable the second application to have permission to access the target content in the server of the first application through the server of the second application. The target content may be the content currently displayed on the mobile phone 100-1.

In some embodiments, the continuity data may further include an application package name, and the application package name indicates the mobile phone 100-1 to automatically recommend the continuity electronic device to open and continuously display the content currently displayed on the mobile phone 100-1 through an application corresponding to the application package name. For example, when the application package name is a package name of the first application that is installed on the mobile phone 100-1 and that is used to open the content currently displayed, the continuity electronic device may open the content currently displayed on the mobile phone 100-1 through the first application. For another example, when the application package name is a package name of the second application different from the package name of the first application that is installed on the mobile phone 100-1 and that is used to open the content currently displayed on the mobile phone 100-1, the continuity electronic device may open the target content through the second application.

In addition, the continuity data may not include the application package name. In this case, the continuity electronic device may open the content currently displayed on the mobile phone 100-1 through an application that is the same as the first application that is installed on the mobile phone 100-1 and that is used to open the content currently displayed on the mobile phone 100-1.

In addition, it may be understood that, in some scenarios, the mobile phone 100-1 is an electronic device that needs to be continued, that is, the content currently displayed on the mobile phone 100-1 needs to be continued to another electronic device for display. In some scenarios, the mobile phone 100-1 may further be a continuity electronic device selected by another electronic device for connection, that is, content currently displayed on the another electronic device needs to be continued to the mobile phone 100-1 for display.

In addition, it should be noted that, in different application scenarios, the mobile phone 100-1 sends different continuity data to the recommended continuity electronic device, and transmission manners used by the mobile phone 100-1 to send the continuity data are also different.

For example, in some embodiments, online content, for example, an online web article or an e-book, currently displayed on the mobile phone 100-1 is continuously displayed on a recommended electronic device. Content displayed online on the mobile phone 100-1 is content obtained from a server in real time. Therefore, the mobile phone 100-1 only needs to send web article JSON data or e-book JSON data generated for the content currently displayed online to the recommended continuity device. After receiving the web article JSON data or the e-book JSON data, the continuity device may obtain corresponding web article content or e-book content from the corresponding server and display the content. In this case, because a data volume to be transmitted is small, a transmission requirement may be met only by establishing a Bluetooth channel between the mobile phone 100-1 and the continuity device.

However, in some embodiments, offline content, for example, an offline web article or an e-book, currently displayed on the mobile phone 100-1 is continuously displayed on a recommended electronic device. When the mobile phone 100-1 needs to send content displayed offline to another electronic device for display continuity, the mobile phone 100-1 further needs to send a corresponding file (for example, a file of a web article or a file of an e-book that is downloaded to the mobile phone 100-1) to the peer end. In this case, a data volume of the file is large. Therefore, to implement fast continuity, a Wi-Fi P2P channel with a large data transmission volume and fast data transmission needs to be established between the mobile phone 100-1 and the continuity device.

In addition, in some embodiments, the mobile phone 100-1 needs to transmit both online and offline files to the continuity device for management and/or display continuity. For example, the mobile phone 100-1 needs to send both offline e-books and online e-books on a bookshelf of a WeChat reading app to a continuity electronic device for cross-device display continuity or management, and display the offline e-books and the online e-books to a user when the user needs to read. In this case, the mobile phone 100-1 needs to establish both a Bluetooth channel and a Wi-Fi P2P channel with the continuity electronic device, transmit web article JSON data or e-book JSON data with a small data volume through the Bluetooth channel, and transmit an offline file through the Wi-Fi P2P channel.

It may be understood that, to implement display continuity of the content currently displayed on the mobile phone 100-1, before an electronic device serving as the continuity device establishes a connection with the to-be-continued mobile phone 100-1, the continuity device and the mobile phone 100-1 need to enable the continuity service function, and are in a connectable state, that is, Bluetooth, Wi-Fi P2P, or another transmission channel is enabled. For example, in some embodiments, to implement continuity of a video currently played by the mobile phone 100-1, a video player needs to be installed on the continuity device. For another example, in some embodiments, to implement continuity of an e-book or a web article currently displayed on the mobile phone 100-1, the continuity reading 120 needs to be installed on the continuity device.

The following uses the flowchart shown in FIG. 6 as an example to describe a specific process in which the e-reader 100-5 serving as a continuity electronic device displays continuity content based on continuity data received from the mobile phone 100-1. Specifically, as shown in FIG. 6, the process includes the following steps.

Step 601: The e-reader 100-5 receives the continuity data sent by the mobile phone 100-1.

For example, in some embodiments, the continuity service 118b of the e-reader 100-5 receives, through a Bluetooth channel, web article JSON data or e-book JSON data that is sent by the mobile phone 100-1. For another example, in some embodiments, the e-reader 100-5 receives, through a Wi-Fi P2P channel, web article JSON data and a file of a web article, or e-book JSON data and a file of an e-book that are sent by the mobile phone 100-1.

Step 602: The e-reader 100-5 identifies a corresponding application scenario based on the continuity data, to enable the e-reader 100-5 to use different apps to continuously display content displayed on the mobile phone 100-1 based on different application scenarios identified.

For example, in some embodiments, the continuity service 118b of the e-reader 100-5 parses out a URI of the web article from the continuity data received from the mobile phone 100-1, and may identify that the corresponding application scenario is web article reading. For another example, in some embodiments, the continuity service 118b of the e-reader 100-5 parses out the e-book JSON data from the continuity data received from the mobile phone 100-1, and may identify that the corresponding application scenario is e-book reading.

Step 603: The e-reader 100-5 determines whether a scenario is a reading scenario. When the scenario is the reading scenario, it indicates that content to be continuously displayed is a web article or an e-book, that is, the corresponding application scenario is a web article reading scenario or an e-book reading scenario, and step 604 is performed. When the scenario is not the reading scenario but another application scenario, like audio and video play or a game, step 605 is performed.

Step 604: The e-reader 100-5 continuously displays the continuity data through the continuity reading 120.

To be specific, when the e-reader 100-5 determines that the application scenario corresponding to the content that needs to be continued is the reading scenario, the e-reader 100-5 continuously displays the continuity data through the continuity reading 120.

For example, the continuity service 118b of the e-reader 100-5 writes the received continuity data into the continuity reading 120, and the continuity reading 120 directly generates an html interface on a display interface of the e-reader 100-5, and continuously displays the e-book or the web article. Alternatively, the continuity reading 120 displays a title, a content summary, a reading progress, and the like of the e-book or the web article. When a user needs to read specific content of the web article or the e-book, the user clicks a corresponding control for continuity reading. Alternatively, the continuity reading 120 performs classified management on e-books or web articles for continuity reading, and generates a reading bookshelf and a web article bookshelf. In this way, the user can view the e-books or the web articles that have been continued.

Step 605: The e-reader 100-5 continuously displays the continuity data through another app.

To be specific, when the e-reader 100-5 determines that the application scenario corresponding to the content that needs to be continued is not the reading scenario, the e-reader 100-5 continuously displays the continuity data through the another app. For example, when the e-reader 100-5 determines that the application scenario corresponding to the content that needs to be continued is a video play scenario, the e-reader 100-5 continuously displays a video through an installed video player. For another example, when the e-reader 100-5 determines that the application scenario corresponding to the content that needs to be continued is a game play scenario, the e-reader 100-5 continuously displays a game interface through an installed game app.

The foregoing describes in detail the process in which the mobile phone 100-1 discovers the electronic devices, identifies the application scenario based on the content currently displayed, recommends the continuity electronic device, and sends the continuity data as shown in FIG. 5, and the process in which the e-reader 100-5 serving as the continuity device receives the continuity data and performs continuity processing as shown in FIG. 6.

The following describes in detail an interaction process between the mobile phone 100-1 and the e-reader 100-5 by using an example in which the mobile phone 100-1 connects a WeChat web article and an e-book currently displayed to the e-reader 100-5 for display with reference to the diagram of the layered architecture shown in FIG. 4A and FIG. 4B.

### Embodiment 1

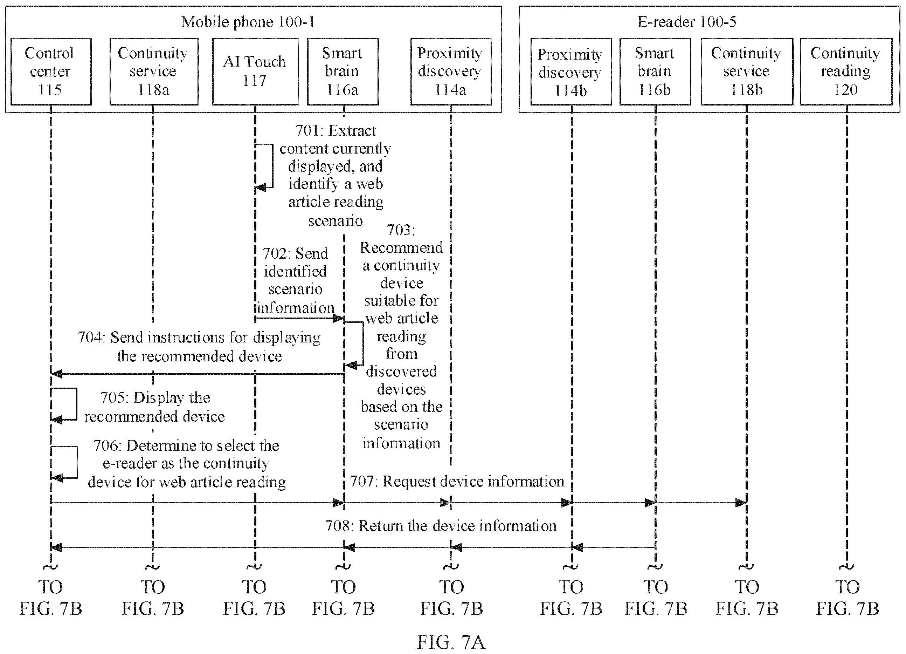

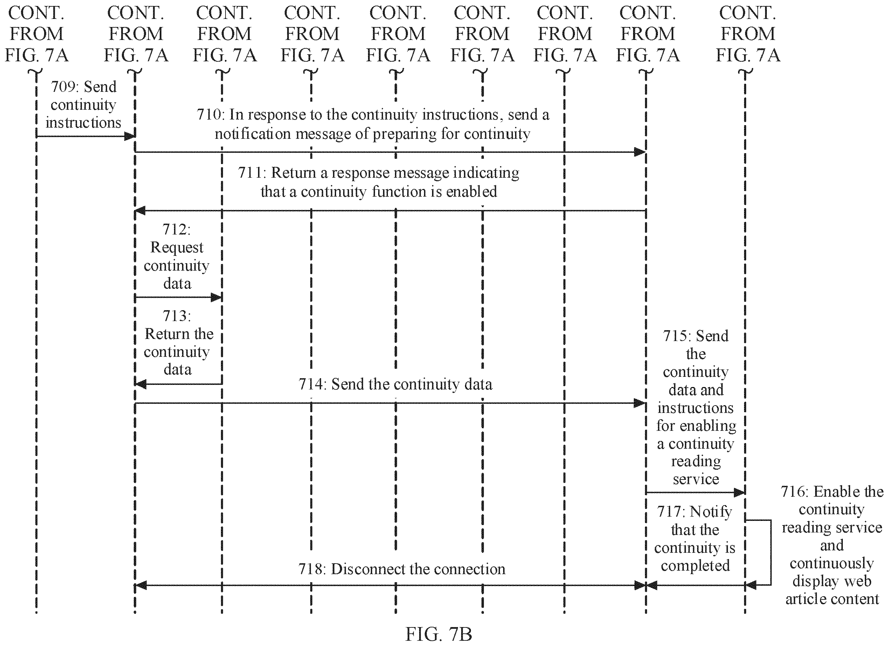

First, a detailed process in which the mobile phone 100-1 connects the WeChat web article currently displayed to the e-reader 100-5 for display is described. Specifically, as shown in FIG. 7A and FIG. 7B, the following steps are included.

Step 701: The AI Touch 117 of the mobile phone 100-1 extracts content currently displayed, and identifies a web article reading scenario.

It should be noted that, it can be learned from the foregoing descriptions of steps 501 to 504 in FIG. 5 that, a WeChat app has different views such as a chat session interface, a Moments display interface, a web article page entered through a network link, and the like. The mobile phone 100-1 invokes a simplified protocol communication service 122a at the framework layer through the continuity service 118a in step 501 to listen to an app corresponding to a foreground application. However, the WeChat app having a plurality of views may have a plurality of possible application scenarios, and therefore further determining is needed. For example, the content currently displayed is extracted through the AI Touch 117 of the mobile phone 100-1, to identify the web article reading scenario. For details, refer to the related descriptions of step 504 in FIG. 5. Details are not described again.

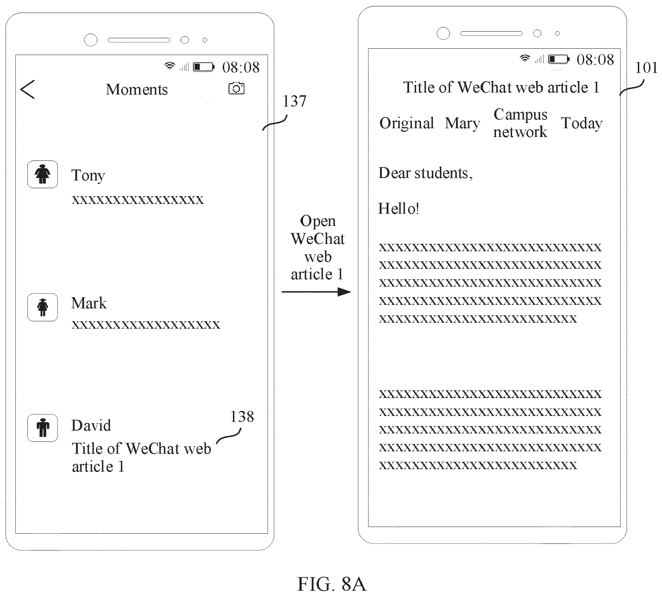

For example, FIG. 8A shows a display interface 137 of WeChat Moments of a user. The display interface 137 includes a network resource link 138, in which a title of a WeChat web article 1 is displayed. After the mobile phone 100-1 detects a click operation on the network resource link 138, the WeChat web article 1 is opened, and a display interface 101 shown in FIG. 8A is displayed. After taking a screenshot of and parsing content of the interface 101, the AI Touch 117 of the mobile phone 100-1 identifies that the content displayed on the interface 101 is a web article, and determines that the mobile phone 100-1 is currently in the web article reading scenario.

Step 702: The AI Touch 117 of the mobile phone 100-1 sends identified scenario information to the smart brain 116a of the mobile phone 100-1.

Step 703: The smart brain 116a of the mobile phone 100-1 recommends a continuity device suitable for web article reading from the discovered devices based on the scenario information.

For example, the mobile phone 100-1 discovers the e-reader 100-5, a speaker, and a notebook computer through Bluetooth advertising, and the smart brain 116a of the mobile phone 100-1 determines that the e-reader 100-5 is more suitable for being used as an electronic device for continuity reading according to a preset rule.

Step 704: The smart brain 116a of the mobile phone 100-1 sends instructions for displaying the recommended device to the control center 115 of the mobile phone 100-1, to enable the control center 115 of the mobile phone 100-1 to display the recommended device.

Step 705: The control center 115 of the mobile phone 100-1 displays the recommended device, to enable the user to determine whether to use the recommended device as the electronic device for continuity reading.

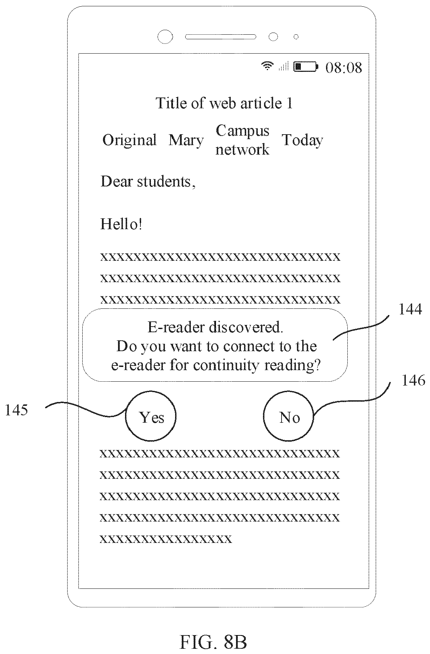

For example, the mobile phone 100-1 pops up prompt information 144 of "E-reader discovered. Do you want to connect to the e-reader for continuity reading?" shown in FIG. 8B for the user to confirm.

Step 706: The control center 115 of the mobile phone 100-1 determines to select the e-reader 100-5 as the continuity device for web article reading.

When detecting an operation of clicking a "yes" control 145 by the user, the control center 115 of the mobile phone 100-1 determines to select the e-reader 100-5 as the continuity device for web article reading. When detecting an operation of clicking a "no" control 146 by the user, the control center 115 of the mobile phone 100-1 determines not to select the e-reader 100-5 as the continuity device for web article reading.

Step 707: The control center 115 of the mobile phone 100-1 requests device information from the continuity service 118b of the e-reader 100-5. For example, device information such as a MAC address, a token used when a wireless communication connection is established, a pre-shared key (pre-shared key, PSK), or a device serial number of the e-reader 100-5 is requested, to establish the wireless communication connection, for example, a Bluetooth connection or a Wi-Fi P2P connection, and perform data interaction based on the established wireless communication connection.

Step 708: The continuity service 118b of the e-reader 100-5 returns the device information to the control center 115 of the mobile phone 100-1.

Step 709: The control center 115 of the mobile phone 100-1 sends continuity instructions to the continuity service 118a of the mobile phone 100-1, to start the continuity service 118a of the mobile phone 100-1.

Step 710: In response to the continuity instructions, the continuity service 118a of the mobile phone 100-1 sends a notification message of preparing for continuity to the continuity service 118b of the e-reader 100-5, to start the continuity service 118b of the e-reader 100-5.

Step 711: The continuity service 118b of the e-reader 100-5 returns a response message indicating that a continuity function is enabled to the continuity service 118a of the mobile phone 100-1.

Step 712: The continuity service 118a of the mobile phone 100-1 requests continuity data from the AI Touch 117 of the mobile phone 100-1.

Step 713: The AI Touch 117 of the mobile phone 100-1 returns the continuity data to the continuity service 118a of the mobile phone 100-1.

For example, the AI Touch 117 of the mobile phone 100-1 returns the web article JSON data that is corresponding to the WeChat web article 1 shown in FIG. 8A and that is defined in Table 2 to the continuity service 118a of the mobile phone 100-1.

Step 714: The continuity service 118a of the mobile phone 100-1 sends the continuity data to the continuity service 118b of the e-reader 100-5.

For example, the mobile phone 100-1 needs to send the WeChat web article 1 displayed online shown in FIG. 8A to the e-reader 100-5 recommended for continuity for display continuity. In this case, the continuity service 118a of the mobile phone 100-1 needs to send the web article JSON data corresponding to content of the WeChat web article 1 shown in FIG. 8A as the continuity data to the continuity service 118b of the e-reader 100-5 through a Bluetooth channel.

For another example, the mobile phone 100-1 needs to send a WeChat web article 2 (not shown) displayed offline to the e-reader 100-5 recommended for continuity for display continuity. In this case, the continuity service 118a of the mobile phone 100-1 needs to request web article JSON data corresponding to the WeChat web article 2 from the Al Touch 117 of the mobile phone 100-1, and request a file corresponding to the offline web article from the WeChat app (not shown), and then sends the web article JSON data and the file as the continuity data to the continuity service 118b of the e-reader 100-5 through Wi-Fi P2P, to enable the e-reader 100-5 to request content of the WeChat web article 2 from a server based on a URI in the web article JSON data.

In some embodiments, to determine which transmission manner is used to transmit the continuity data, when sending the continuity data to the continuity service 118b of the e-reader 100-5, the continuity service 118a of the mobile phone 100-1 may determine, based on data obtained from an interface pre-defined in the AI Touch 117 of the mobile phone 100-1, whether a current application scenario is an online web article reading scenario or an offline web article reading scenario, and further determine whether to send the continuity data through Bluetooth or Wi-Fi P2P.

Step 715: The continuity service 118b of the e-reader 100-5 sends the continuity data and instructions for enabling a continuity reading service to the continuity reading 120 of the e-reader 100-5, to enable the continuity reading 120 of the e-reader 100-5 to enable the continuity reading service and continuously display web article content.

Step 716: The continuity reading 120 of the e-reader 100-5 enables the continuity reading service, and continuously displays the web article content.

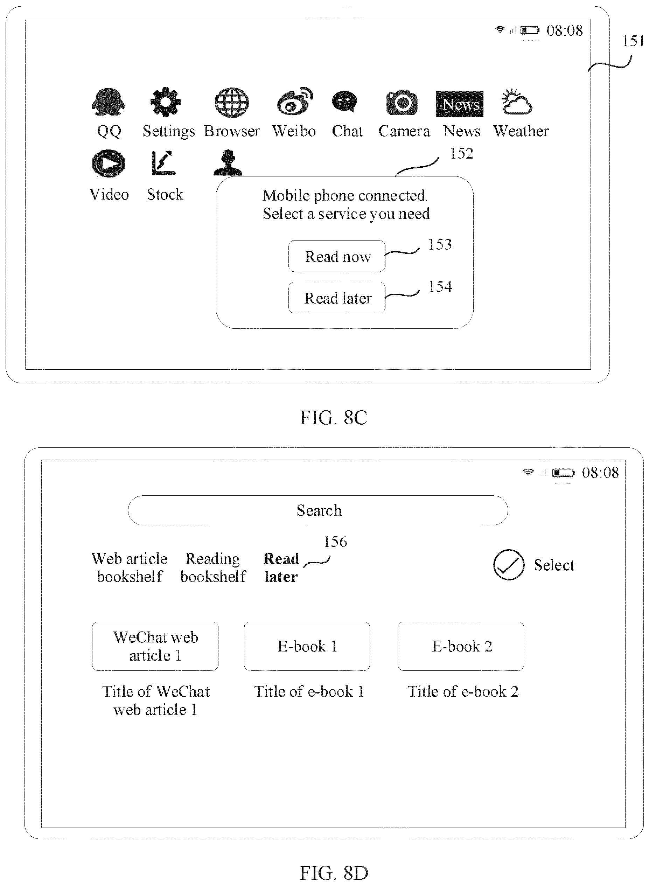

In some embodiments, after the e-reader 100-5 is connected to the mobile phone 100-1, a dialog box 152 pops up in an interface 151 currently displayed on the e-reader 100-5, as shown in FIG. 8C. The dialog box 152 includes a text prompt of "Mobile phone 100-1 connected. Select a service you need", a "read now" control 153, and a "read later" control 154.

When the continuity reading 120 of the e-reader 100-5 detects a click operation by the user on the "read now" control 153, a continuity reading operation is performed, the continuity reading service is enabled based on the continuity data received from the continuity service 118a of the mobile phone 100-1, and a web page interface is displayed, that is, the web article content is displayed.

For example, in some embodiments, after detecting a click operation by the user on the "read now" control 153, the continuity reading 120 of the e-reader 100-5 parses the continuity data received from the continuity service 118a of the mobile phone 100-1, requests, from the server, interface content corresponding to a URI that is included in the continuity data and that is corresponding to the WeChat web article 1 in the interface 101 shown in FIG. 8A, generates the web page interface corresponding to the WeChat web article 1, and displays the interface 102 of the e-reader 100-5 shown in FIG. 2D. Content displayed on the interface 102 is the same as content of the interface 101 of the mobile phone 100-1 shown in FIG. 8A, to implement a function of continuously displaying the WeChat web article.

When the continuity reading 120 of the e-reader 100-5 detects a click operation by the user on the "read later" control 154, a corresponding thumbnail or title is generated based on the continuity data received from the continuity service 118a of the mobile phone 100-1, and the thumbnail or the title is added to a read later menu of the continuity reading 120 of the e-reader 100-5, to enable the user to click the read later menu to select a web article of interest and read the web article content when the user needs to read the web article, to implement a cross-device read later function.

For example, in some embodiments, after detecting a click operation by the user on the "read later" control 154, the continuity reading 120 of the e-reader 100-5 parses the continuity data received from the continuity service 118a of the mobile phone 100-1, and requests, from the server, interface content corresponding to a URI that is included in the continuity data and that is corresponding to the WeChat web article 1 in the interface 101 shown in FIG. 8A (an online web article is used as an example herein), and then extracts information such as the title of the web article based on the requested interface content, and adds the information to read later 156 shown in FIG. 8D. When the user clicks the WeChat web article 1, the e-reader 100-5 jumps to the content display interface 102 of the WeChat web article 1 shown in FIG. 2D.

It may be understood that, for an offline web article, the continuity reading 120 of the e-reader 100-5 parses a file of the web article in the received continuity data into an html file, and displays the parsed html file as display content.

In addition, the continuity reading 120 of the e-reader 100-5 may further add a historically continued web article to a web article bookshelf, to enable the user to click and view the historically continued web article when needed. For example, as shown in FIG. 2F, the e-reader 100-5 adds a historically continued Weibo web article 1, a historically continued Toutiao web article 1, and the like to a web article bookshelf 105.

Step 717: The continuity reading 120 of the e-reader 100-5 notifies the continuity service 118 of the e-reader 100-5 that the continuity is completed.

Step 718: The continuity service 118 of the e-reader 100-5 is disconnected from the continuity service 118a of the mobile phone 100-1.

In addition, in some embodiments, to reduce power consumption, after the continuity reading 120 of the e-reader 100-5 completes the foregoing continuity reading or "read later", a notification may be sent to the continuity service 118a of the mobile phone 100-1 through the continuity service 118b of the e-reader 100-5, to disconnect the communication connection between the e-reader 100-5 and the mobile phone 100-1.

### Embodiment 2

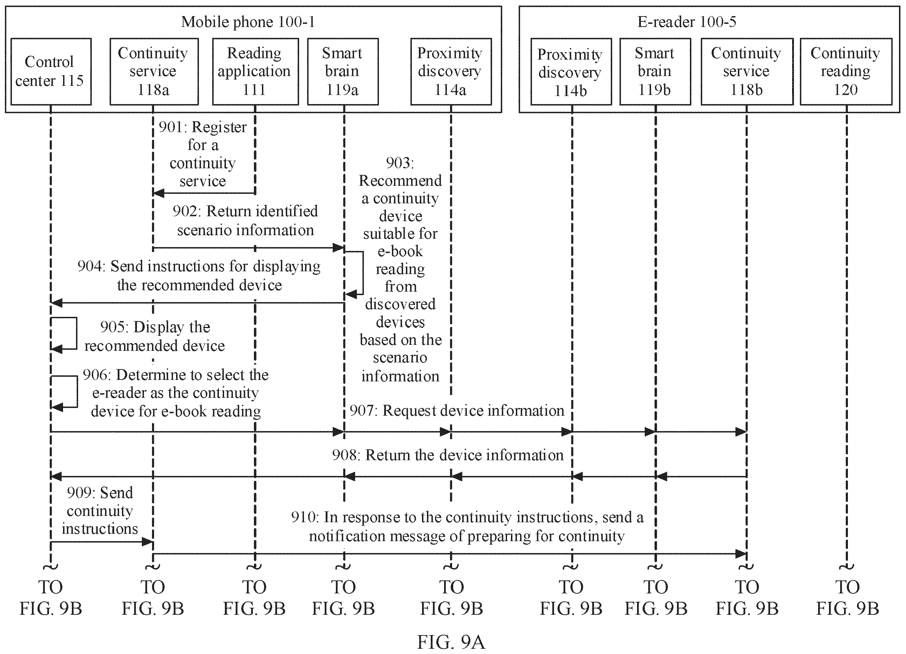

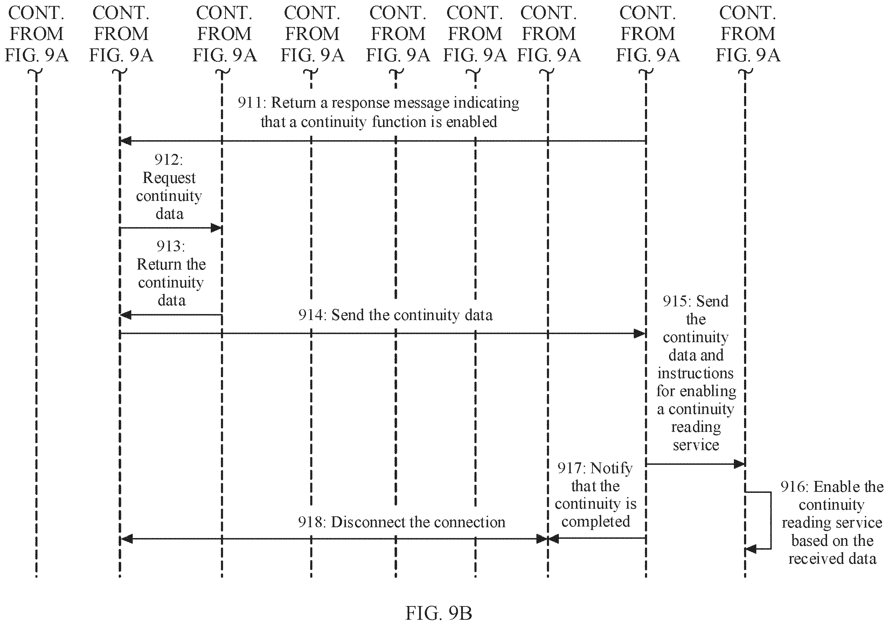

The following describes a detailed process in which the mobile phone 100-1 connects the e-book currently displayed to the e-reader 100-5 for display. Specifically, as shown in FIG. 9A and FIG. 9B, the following steps are included.

Step 901: The reading application 111 of the mobile phone 100-1 registers a continuity service with the continuity service 118a.

In addition, in some embodiments, to enable the continuity service 118a of the mobile phone 100-1 to listen to the reading application 111, the reading application 111 further needs to register with the simplified protocol communication service 122a of the mobile phone 100-1.

For example, in the embodiment shown in FIG. 2E, the mobile phone 100-1 is currently displaying an interface 103 of a book in a WeChat reading app. In some embodiments, the mobile phone 100-1 may listen to an app corresponding to a foreground application through the continuity service 118a in step 501 in FIG. 5. Generally, a reading app can be used only to read an e-book. Therefore, when the mobile phone 100-1 determines, through listening to the foreground application, that the foreground application is in a preset trustlist, the mobile phone 100-1 may determine that a current application scenario is an e-book reading scenario.

In some embodiments, after taking a screenshot of and parsing content of the interface 103 through the AI Touch 117, the mobile phone 100-1 may further identify that the content displayed on the interface 103 is an e-book, and determine that the mobile phone 100-1 is currently in the e-book reading scenario.

Step 902: The continuity service 118a of the mobile phone 100-1 sends identified scenario information to the smart brain 116a of the mobile phone 100-1.

Step 903: The smart brain 116a of the mobile phone 100-1 recommends a continuity device suitable for e-book reading from discovered devices based on the scenario information.

For example, the mobile phone 100-1 discovers the e-reader 100-5, a speaker, and a notebook computer through Bluetooth advertising, and the smart brain 116a of the mobile phone 100-1 determines that the e-reader 100-5 is more suitable for being used as an electronic device for continuity reading according to a preset rule.

Step 904: The smart brain 116a of the mobile phone 100-1 sends instructions for displaying the recommended device to the control center 115 of the mobile phone 100-1, to enable the control center 115 of the mobile phone 100-1 to display the recommended device.

Step 905: The control center 115 of the mobile phone 100-1 displays the recommended device, to enable the user to select to determine whether to use the recommended device as the electronic device for continuity reading.

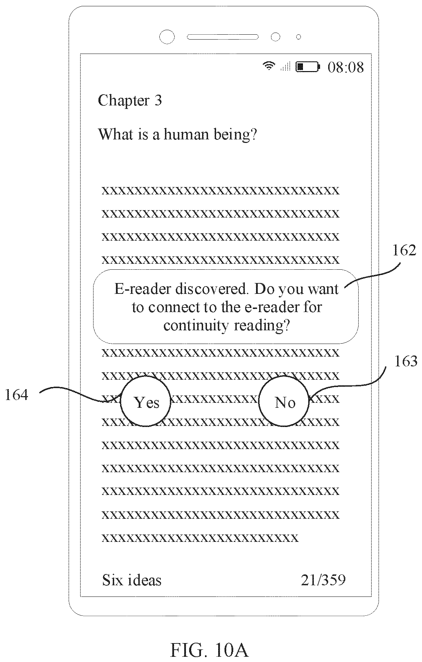

For example, the mobile phone 100-1 pops up prompt information 162 of "E-reader discovered. Do you want to connect to the e-reader for continuity reading?" shown in FIG. 10A for the user to confirm.

Step 906: The control center 115 of the mobile phone 100-1 determines to select the e-reader 100-5 as the continuity device for e-book reading.

When detecting an operation of clicking a "yes" control 164 by the user, the control center 115 of the mobile phone 100-1 determines to select the e-reader 100-5 as the continuity device for e-book reading. When detecting an operation of clicking a "no" control 163 by the user, the control center 115 of the mobile phone 100-1 determines not to select the e-reader 100-5 as the continuity device for e-book reading.

Step 907: The control center 115 of the mobile phone 100-1 requests device information from the continuity service 118b of the e-reader 100-5. For example, device information such as a MAC address, a token used when a wireless communication connection is established, a pre-shared key (pre-shared key, PSK), or a device serial number of the e-reader 100-5 is requested, to establish the wireless communication connection, for example, a Bluetooth connection or a Wi-Fi P2P connection, and perform data interaction based on the established wireless communication connection.

Step 908: The continuity service 118b of the e-reader 100-5 returns the device information to the control center 115 of the mobile phone 100-1.

Step 909: The control center 115 of the mobile phone 100-1 sends continuity instructions to the continuity service 118a of the mobile phone 100-1, to start the continuity service 118a of the mobile phone 100-1.

Step 910: In response to the continuity instructions, the continuity service 118a of the mobile phone 100-1 sends a notification message of preparing for continuity to the continuity service 118b of the e-reader 100-5, to start the continuity service 118b of the e-reader 100-5.

Step 911: The continuity service 118b of the e-reader 100-5 returns a response message indicating that a continuity function is enabled to the continuity service 118a of the mobile phone 100-1.

Step 912: The continuity service 118a of the mobile phone 100-1 requests continuity data from the AI Touch 117 of the mobile phone 100-1.

In some embodiments, the continuity service 118a of the mobile phone 100-1 may further directly request e-book JSON data currently displayed from the reading application 111 of the mobile phone 100-1.

Step 913: The AI Touch 117 of the mobile phone 100-1 returns the continuity data to the continuity service 118a of the mobile phone 100-1.

For example, the AI Touch 117 of the mobile phone 100-1 returns JSON data corresponding to the WeChat e-book 1 shown in FIG. 2E to the continuity service 118a of the mobile phone 100-1.

For another example, the continuity service 118a of the mobile phone 100-1 directly requests the e-book JSON data currently displayed from the reading application 111 of the mobile phone 100-1. In this case, the reading application 111 of the mobile phone 100-1 returns the JSON data corresponding to the e-book 1 to the continuity service 118a of the mobile phone 100-1.

Step 914: The continuity service 118a of the mobile phone 100-1 sends the continuity data to the continuity service 118b of the e-reader 100-5.

For example, the mobile phone 100-1 needs to send the WeChat e-book 1 displayed online shown in FIG. 2E to the e-reader 100-5 recommended for continuity for display continuity. In this case, the continuity service 118a of the mobile phone 100-1 needs to send the JSON data corresponding to the WeChat e-book 1 shown in FIG. 2E as the continuity data to the continuity service 118b of the e-reader 100-5 through a Bluetooth channel.

For another example, the mobile phone 100-1 needs to send a WeChat e-book 2 (not shown) displayed offline to the e-reader 100-5 recommended for continuity for display continuity. In this case, the continuity service 118a of the mobile phone 100-1 needs to request JSON data corresponding to the WeChat e-book 2 from the Al Touch 117 of the mobile phone 100-1, and request a file corresponding to the offline e-book from the WeChat app (not shown). Alternatively, the continuity service 118a of the mobile phone 100-1 directly requests the JSON data and the file that are corresponding to the WeChat e-book 2 from the WeChat app of the mobile phone 100-1, and then sends the JSON data and the file that are corresponding to the e-book 2 as the continuity data to the continuity service 118b of the e-reader 100-5 through Wi-Fi P2P.

In some embodiments, to enable the continuity service 118a of the mobile phone 100-1 to determine to transmit the continuity data through which wireless communication manner before sending the continuity data, an identifier field that represents a current application scenario and that is included in the foregoing e-book JSON data, for example, a "file_path" field, may be queried to determine a corresponding application scenario. When the continuity service 118a of the mobile phone 100-1 determines that the e-book JSON data does not include the "file_path" field before sending the continuity data, it is determined that the current application scenario is cross-device transfer of online e-book reading, and the continuity data is sent through the Bluetooth channel. When the continuity service 118a of the mobile phone 100-1 determines that the e-book JSON data includes the "file_path" field before sending the continuity data, and a length of the field is 1, it is determined that the current application scenario is cross-device transfer of offline e-book reading, and the continuity data is sent through Wi-Fi P2P. When the continuity service 118a of the mobile phone 100-1 determines that the e-book JSON data includes the "file_path" field before sending the continuity data, and a length of the field is greater than 1, it is determined that the current application scenario is online and offline hybrid-bookshelf cross-device transfer, that is, online e-book JSON data needs to be sent through Bluetooth, and offline e-book file data needs to be sent through Wi-Fi P2P.

Step 915: The continuity service 118b of the e-reader 100-5 sends the continuity data and instructions for enabling a continuity reading service to the continuity reading 120 of the e-reader 100-5, to enable the continuity reading 120 of the e-reader 100-5 to enable the continuity reading service and continuously display e-book content.

Step 916: The continuity reading 120 of the e-reader 100-5 enables the continuity reading service, and continuously displays the e-book content.

In some embodiments, the continuity reading 120 of the e-reader 100-5 requests a corresponding online e-book from a server of the continuity reading 120 based on an identifier like a title of the e-book in JSON data parsed from the continuity data, and displays the online e-book as display content.

In some embodiments, the continuity reading 120 of the e-reader 100-5 directly invokes an interface for local import and local e-book progress synchronization based on an identifier like a title of an e-book in JSON data parsed from the continuity data and a file of the e-book, obtains a reading progress from the parsed JSON data, and then displays offline e-book content of a corresponding progress.

In some embodiments, after the e-reader 100-5 is connected to the mobile phone 100-1, a dialog box 152 pops up in an interface 151 currently displayed on the e-reader 100-5, as shown in FIG. 8C. The dialog box 152 includes a text prompt of "Mobile phone connected. Select a service you need", a "read now" control 153, and a "read later" control 154.

When the e-reader 100-5 detects a click operation by the user on the "read now" control 153, a reading operation is immediately performed, a reader module (a module that implements a reader function in the continuity reading 120) in the continuity reading 120 is directly started based on the continuity data received from the continuity service 118a of the mobile phone 100-1, and a currently continued and synchronized e-book page is displayed based on parsed e-book data

For example, in some embodiments, after detecting a click operation by the user on the "read now" control 153, the e-reader 100-5 parses the continuity data received from the continuity service 118a of the mobile phone 100-1, requests corresponding e-book content from the server of the continuity reading 120 based on the JSON data that is corresponding to the WeChat e-book 1 in the interface 103 shown in FIG. 2E and that is included in the continuity data and the JSON data of the WeChat e-book 1 in the reader module in the continuity reading 120 of the e-reader 100-5, and displays the corresponding e-book page as the display content. In addition, the e-reader 100-5 generates an e-book display interface corresponding to the WeChat e-book 1, and displays an interface 104 of the e-reader 100-5 shown in FIG. 2E. Content displayed on the interface 104 is the same as content of the interface 103 of the mobile phone 100-1 shown in FIG. 2E, to implement a function of continuously displaying the WeChat e-book 1.

When the e-reader 100-5 detects a click operation by the user on the "read later" control 154, a corresponding thumbnail or title is generated based on the continuity data received from the continuity service 118a of the mobile phone 100-1, and the thumbnail or the title is added to read later of the continuity reading 120 of the e-reader 100-5, to enable the user to click read later 156 shown in FIG. 8D to select an e-book of interest and read the e-book content when the user needs to read the e-book, to implement a cross-device read later function.

In addition, it may be understood that, the e-book JSON data includes reading progress information. Therefore, the continuity reading 120 of the e-reader 100-5 may synchronize the reading progress based on the progress information. After the user clicks the e-book 1 in the read later 156, content displayed on the interface 104 of the e-reader 100-5 shown in FIG. 2E is consistent with the content displayed on the interface 103 of the mobile phone 100-1 shown in FIG. 2E, that is, the reading progress is synchronized.

In addition, the continuity reading 120 of the e-reader 100-5 may further add a historically continued e-book to a reading bookshelf 106 shown in FIG. 2G, to enable the user to click and view the historically continued e-book when needed.

For example, in some embodiments, after detecting a click operation by the user on the "read now" control 153 shown in FIG. 8C, the e-reader 100-5 parses the continuity data received from the continuity service 118a of the mobile phone 100-1 through the continuity reading 120 of the e-reader 100-5, requests interface content corresponding to the JSON data that is included in the continuity data and that is corresponding to the WeChat e-book 1 in the interface 103 shown in FIG. 2E from the server of the continuity reading, and extracts information such as a title and a reading progress of the e-book, to generate an e-book 1 in the reading bookshelf 106 shown in FIG. 2G. When the user clicks the e-book 1, the e-reader 100-5 jumps to the content display interface 104 of the WeChat e-book 1 shown in FIG. 2E.

In addition, in some embodiments, to avoid repeatedly adding a same e-book to the reading bookshelf for several times, the e-reader 100-5 may perform deduplication determining before adding the e-book to the reading bookshelf, for example, parse the received continuity data, and determine, based on a file name and a file size of the e-book obtained by parsing, whether the e-book is already in the reading bookshelf. If the e-book is already in the reading bookshelf, the e-book is not added to the reading bookshelf again. If the e-book is not in the reading bookshelf, the e-book is added to the reading bookshelf.

Step 917: The continuity reading 120 of the e-reader 100-5 notifies the continuity service 118 of the e-reader 100-5 that the continuity is completed.

Step 918: The continuity service 118 of the e-reader 100-5 is disconnected from the continuity service 118a of the mobile phone 100-1.

In addition, in some embodiments, to reduce power consumption, after the continuity reading 120 of the e-reader 100-5 completes the foregoing continuity reading or read later, a notification may be sent to the continuity service 118a of the mobile phone 100-1 through the continuity service 118b of the e-reader 100-5, to disconnect the communication connection between the e-reader 100-5 and the mobile phone 100-1.

The distributed display solution provided in this application is described in detail above by using an example in which the WeChat web article currently displayed on the mobile phone 100-1 is continued to the automatically recommended e-reader 100-5 for display continuity in Embodiment 1 and an example in which the e-book currently displayed on the mobile phone 100-1 is continued to the automatically recommended e-reader 100-5 for display continuity in Embodiment 2.

In addition, for the e-book reading scenario, in the distributed display solution provided in this application, a plurality of offline or online e-books on a bookshelf of a reading app currently running on the mobile phone 100-1 may alternatively be sent in batches to the e-reader 100-5, and the e-reader 100-5 performs continuity management or display for the plurality of offline or online e-books received in batches on the reading bookshelf or the web article bookshelf of the continuity reading 120. That is, the e-reader 100-5 may alternatively serve a role of the mobile phone 100-1 to perform reverse continuity.

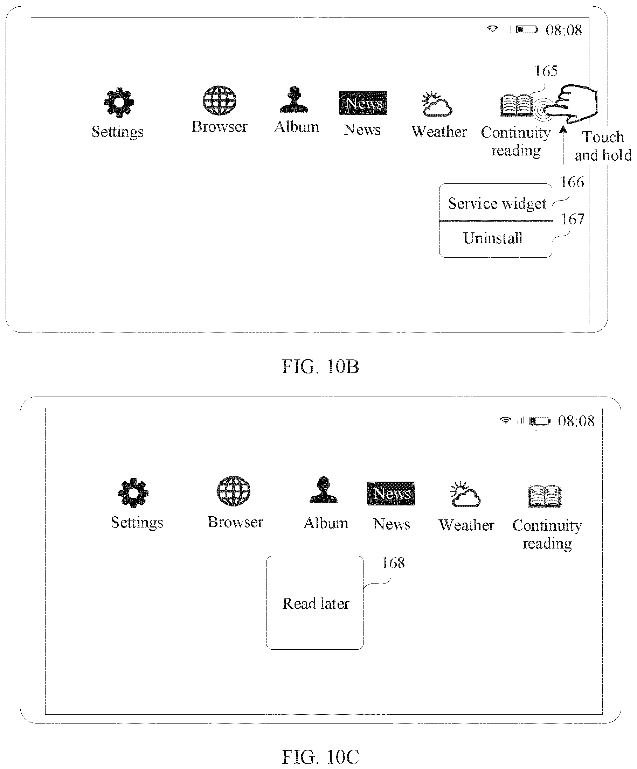

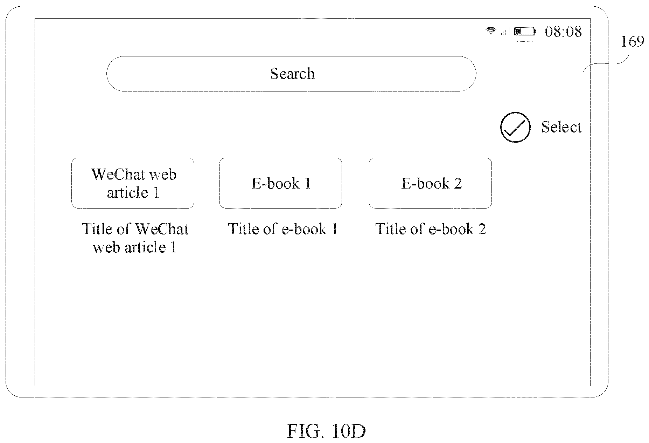

In addition, to facilitate user operations, a "read later widget" for the read later function may be generated in the continuity reading 120 of the e-reader 100-5. The "read later widget" is a service widget embedded in the continuity reading 120, and is an interface display form of a feature ability (Feature Ability, FA) (herein means a read later service provided by the continuity reading 120). The "read later widget" moves important information or an operation of the read later service to the widget, to implement direct service delivery. For example, in the embodiment shown in FIG. 10B, the user touches and holds a continuity reading icon 165 on a desktop of the e-reader 100-5, and a pop-up drop-down menu includes a service widget control 166 and an uninstallation control 167. After the user clicks the service widget control 166, a read later widget 168 shown in FIG. 10C is displayed, and the user may drag the read later widget 168 to any location on the desktop of the e-reader 100-5. When the user clicks the read later widget 168, an interface 169 shown in FIG. 10D is displayed. Any web article or e-book in the user interface 169 may implement the read later function.

### Embodiment 3

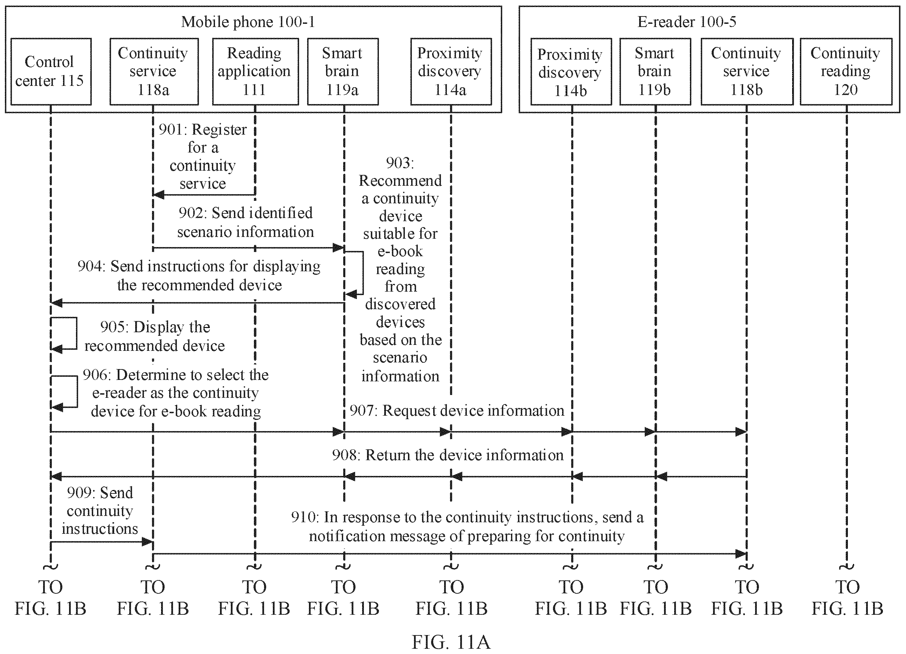

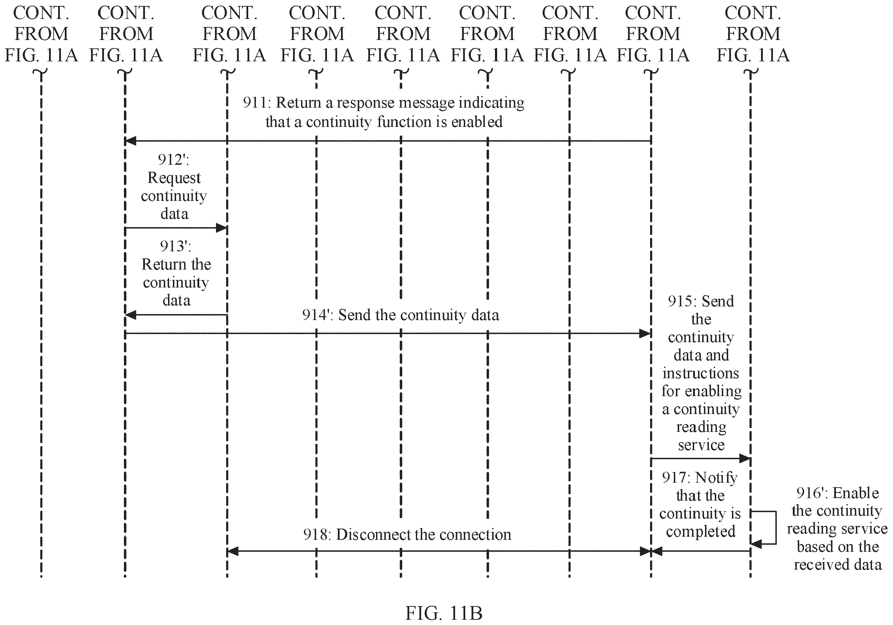

The following uses the flowchart shown in FIG. 11A and FIG. 11B as an example to describe an example of a process in which the mobile phone 100-1 sends a plurality of offline or online e-books on a bookshelf of the reading application 111 to the e-reader 100-5 in batches, and the e-reader 100-5 performs continuity management or display on a reading bookshelf of the continuity reading 120, briefly referred to as a hybrid-bookshelf cross-device transfer process. The flowchart shown in FIG. 11A and FIG. 11B differs from the flowchart that is shown in FIG. 9A and FIG. 9B and that is described in Embodiment 2 in that step 912', step 913', and step 914' shown in FIG. 11A and FIG. 11B are respectively different from step 912, step 913, step 914, and step 916 shown in FIG. 9A and FIG. 9B, and other steps are the same as corresponding steps in the flowchart shown in FIG. 9A and FIG. 9B. Therefore, the following describes in detail only step 912', step 913', step 914', and step 916' shown in FIG. 11A and FIG. 11B. Specifically:
Step 912': The continuity service 118a of the mobile phone 100-1 requests continuity data from the reading application 111 of the mobile phone 100-1.

For example, it is assumed that the mobile phone 100-1 recommends the e-reader 100-5 as an electronic device suitable for continuity reading from discovered electronic devices, and the mobile phone 100-1 establishes a wireless communication connection with the e-reader 100-5 in response to an operation by the user on selecting to connect the e-reader 100-5 as a continuity device.

Then, the mobile phone 100-1 needs to send a plurality of e-books on a bookshelf of a WeChat reading app to the e-reader 100-5 for continuity management or display. In this case, the user may select a plurality of offline and/or online e-books on the bookshelf of the WeChat reading app of the mobile phone 100-1, and then send the plurality of offline and/or online e-books to the e-reader 100-5 in batches for continuity management or display. The continuity service 118a of the mobile phone 100-1 selects data of a plurality of offline and/or online e-books to be continued from the reading application 111 of the mobile phone 100-1.

Step 913': The reading application 111 of the mobile phone 100-1 returns the continuity data to the continuity service 118a of the mobile phone 100-1.

Step 914': The continuity service 118a of the mobile phone 100-1 sends the continuity data to the continuity service 118b of the e-reader 100-5.

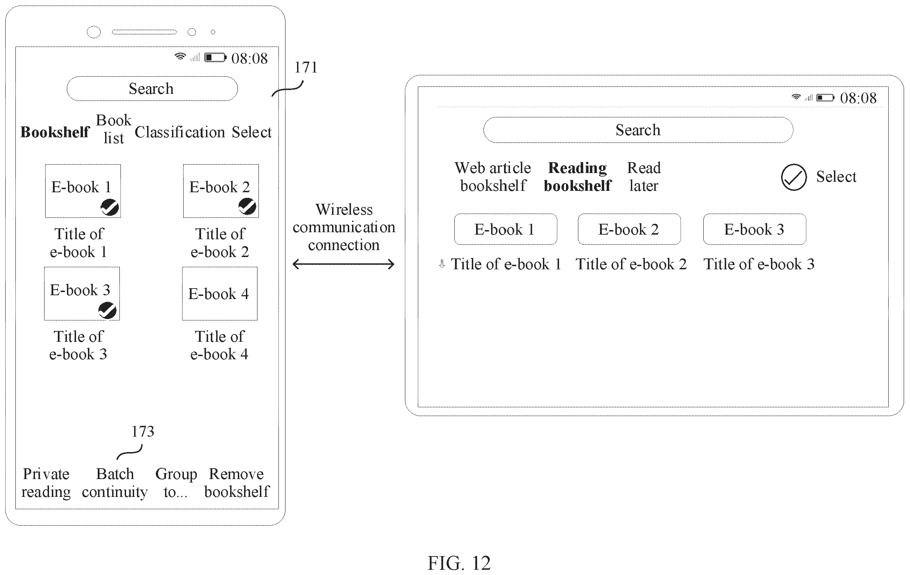

For example, in the embodiment shown in FIG. 12, a bookshelf display interface 171 of the WeChat reading app of the mobile phone 100-1 is displayed. As shown in FIG. 12, the bookshelf of the WeChat reading app of the mobile phone 100-1 includes e-books 1 to 4, where the e-book 1 is an offline e-book that has been downloaded to the mobile phone 100-1, and the e-books 2 to 4 are online e-books. After the WeChat reading app of the mobile phone 100-1 responds to an operation of selecting the e-books 1 to 3 and clicking a batch continuity 173 control by the user, the continuity service 118a of the mobile phone 100-1 sends continuity data corresponding to the e-books 1 to 3 selected by the user to the continuity service 118b of the e-reader 100-5.

For the online e-book 2 and the online e-book 3, the continuity service 118a of the mobile phone 100-1 sends e-book JSON data corresponding to the e-book 2 and the e-book 3 through Bluetooth. For the offline e-book 1, the continuity service 118a of the mobile phone 100-1 sends a file corresponding to the e-book 1 to the continuity service 118b of the e-reader 100-5 through Wi-Fi P2P.

In some embodiments, data sent by the continuity service 118a of the mobile phone 100-1 to the continuity service 118b of the e-reader 100-5 through Bluetooth has a format shown in Table 3 below.

**Table 3**

| Field name | Meaning |
|---|---|
| String packageName | Application package name |
| String appName | Application name |
| String paraData | Continuity data |
| int contibuityType | Continuity type |
| String pageUri | Web page information |
| int continuityState | Continuity state |

It should be noted that, in the process of hybrid-bookshelf cross-device transfer in Embodiment 3, a continuity data field String paraData may be filled with the e-book JSON data shown in Table 1, and then the JSON data is converted into a character string (string). In some other embodiments, when a plurality of offline or online web articles in a bookshelf of an app of the mobile phone 100-1 need to be sent in batches to the e-reader 100-5 for continuity management, a continuity data field String paraData may be filled with the web article JSON data shown in Table 2, and then the JSON data is converted into a character string (string).

It may be understood that Table 3 is only an illustrative example of a format of data sent by the continuity service 118a of the mobile phone 100-1 to the continuity service 118b of the e-reader 100-5 through Bluetooth. During specific implementation, a specific format of the data sent by the continuity service 118a of the mobile phone 100-1 to the continuity service 118b of the e-reader 100-5 through Bluetooth, and a meaning of each field may be determined based on an actual situation. This is not limited in this application.

Step 916': The continuity reading 120 of the e-reader 100-5 enables a continuity reading service based on the received data.

For example, a reading module of the continuity reading 120 of the e-reader 100-5 processes the received JSON data of the e-book 1, requests the server of the continuity reading 120 to download and view information about the e-book 1, and displays the information on a reading bookshelf shown in FIG. 12. In addition, the continuity reading 120 of the e-reader 100-5 directly invokes an interface for local import and local e-book progress synchronization, imports received files of the e-book 2 and the e-book 3 into the reading bookshelf, and displays the files on the reading bookshelf shown in FIG. 12. In this way, cross-device bookshelf management is implemented, and user experience is improved.

Step 917: The continuity reading 120 of the e-reader 100-5 notifies the continuity service 118 of the e-reader 100-5 that the continuity is completed.

Step 918: The continuity service 118 of the e-reader 100-5 is disconnected from the continuity service 118a of the mobile phone 100-1.

In addition, in some embodiments, to reduce power consumption, after the continuity reading 120 of the e-reader 100-5 completes the foregoing hybrid-bookshelf cross-device transfer, a notification may be sent to the continuity service 118a of the mobile phone 100-1 through the continuity service 118b of the e-reader 100-5, to disconnect the communication connection between the e-reader 100-5 and the mobile phone 100-1.

In the distributed display solution provided in this application, a current application scenario of an electronic device is identified, to automatically select an electronic device more suitable for display continuity from other electronic devices discovered in a device network based on the identified application scenario, instead of passively using only a device that is pre-selected by the user as the continuity device under an operation of the user, improving user experience. In addition, further, in the distributed display solution provided in this application, in the reading scenario, that is, when the content currently displayed on the electronic device is the e-book, the web article, or the bookshelf of the reading app, the electronic device as the continuity device can further perform classified management on e-books or web articles sent by another electronic device, generate a corresponding reading bookshelf corresponding to the e-books, and generate a corresponding web article bookshelf corresponding to the web articles, to provide a better continuity reading service for the user and further improve reading experience of the user in the reading scenario.

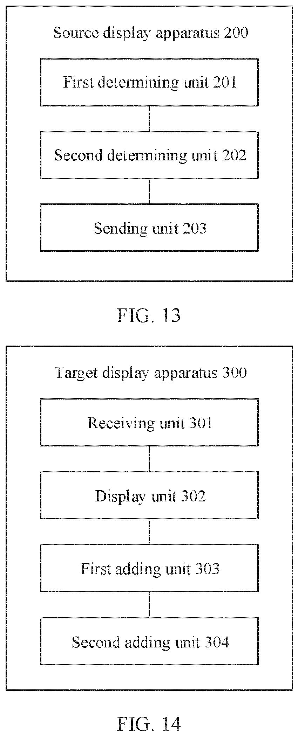

FIG. 13 is a block diagram of a structure of a source display apparatus 200 according to some embodiments of this application. As shown in FIG. 13, the source display apparatus 200 includes a first determining unit 201, a second determining unit 202, and a sending unit 203. The first determining unit 201 is configured to determine target content that is in the source display apparatus 200 and that is to be continuously displayed through another display apparatus. The second determining unit 202 is configured to determine, based on the target content, a target display apparatus suitable for continuously displaying the target content from a plurality of display apparatuses. The sending unit 203 is configured to send, to the target display apparatus, continuity data needed for continuously displaying the target content on the target display apparatus.

In some embodiments, the target content is content currently displayed on the source display apparatus.

In some embodiments, the second determining unit determines, from the plurality of display apparatuses, the target display apparatus suitable for continuously displaying the target content in the following manner.

The second determining unit determines, based on the target content, an application scenario corresponding to the target content.

The second determining unit determines, from the plurality of display apparatuses based on the application scenario, the target display apparatus suitable for continuously displaying the target content.

In some embodiments, the second determining unit determines, from the plurality of display apparatuses, the target display apparatus suitable for continuously displaying the target content in the following manner.

The second determining unit determines, based on the target content, that the application scenario corresponding to the target content is a reading scenario.

The second determining unit determines, from the plurality of display apparatuses based on the reading scenario, the target display apparatus suitable for continuously displaying the target content in the reading scenario.

In some embodiments, the second determining unit determines the application scenario corresponding to the target content in the following manner.

The second determining unit determines, based on the target content, a first application that is installed on the source display apparatus and that displays the target content.

The second determining unit determines, based on the first application, the application scenario corresponding to the target content.

In some embodiments, the sending unit sends, to the target display apparatus, the continuity data needed for continuously displaying the target content on the target display apparatus in the following manner.

When the target content is online content, the sending unit sends, to the target display apparatus through Bluetooth, the continuity data needed for continuously displaying the target content on the target display apparatus.

Alternatively, when the target content is offline content, the sending unit sends, to the target display apparatus through wireless-fidelity point-to-point (Wireless-Fidelity point-to-point, Wi-Fi P2P), the continuity data needed for continuously displaying the online content on the target display apparatus.

In addition, in some embodiments, when the target content is an online web article, the continuity data is online web article continuity data, and the online web article continuity data includes a uniform resource identifier (Uniform Resource Identifier, URI) of the online web article.

Alternatively, when the target content is an offline web article, the continuity data is offline web article continuity data, and the offline web article continuity data includes a file of the offline web article.

Alternatively, when the target content is an online e-book, the continuity data is online e-book continuity data, and the online e-book continuity data includes an identifier and a reading progress of the online e-book.

Alternatively, when the target content is an offline e-book, the continuity data is offline e-book continuity data, and the offline e-book continuity data includes a file and a reading progress of the offline e-book.

In some embodiments, the online web article continuity data further includes at least one of a title, a parsing source, parsing time, a server source, and an integrity check identifier of the online web article.

In some embodiments, the offline web article continuity data further includes at least one of a URI, a title, a parsing source, parsing time, a server source, and an integrity check identifier of the offline web article.

In some embodiments, the online e-book continuity data further includes a chapter structure of the online e-book.

In some embodiments, the offline e-book continuity data further includes either the identifier or the chapter structure of the online e-book.

In some embodiments, the continuity data includes an application package name, and the application package name indicates the target display apparatus to open the target content through an application corresponding to the application package name.

In some embodiments, the continuity data further includes identity authentication information of a first application that is installed on the source display apparatus and that displays the target content, and the identity authentication information enables the target display apparatus to have permission to obtain the target content from a server of the first application.

In some embodiments, the server of the first application that is installed on the source display apparatus and that displays the target content and a server of a second application that is installed on the target display apparatus and that continuously displays the target content have mutual access permission, to enable the server of the second application to have permission to access the target content in the server of the first application, where the first application of the source display apparatus obtains the target content from the server of the first application.

FIG. 14 is a block diagram of a structure of a target display apparatus 300 according to some embodiments of this application. As shown in FIG. 14, the target display apparatus 300 includes a receiving unit 301, a display unit 302, a first adding unit 303, and a second adding unit 304. The receiving unit 301 is configured to receive continuity data that is sent by a source display apparatus and that is needed for continuously displaying target content on the target display apparatus, where the target content is content that is determined by a first determining unit of the source display apparatus, that is in the source display apparatus, and that is to be continuously displayed through another display apparatus. The display unit 302 is configured to continuously display the target content based on the continuity data received from a sending unit of the source display apparatus. The first adding unit 303 is configured to add the target content to a bookshelf of a second application based on the continuity data received from the sending unit of the source display apparatus. The second adding unit 304 is configured to add the target content to a read later widget of the second application installed on the target display apparatus based on the continuity data received from the sending unit of the source display apparatus.

In some embodiments, when the target content is an online web article, the continuity data is online web article continuity data, and the online web article continuity data includes a uniform resource identifier (Uniform Resource Identifier, URI) of the online web article.

In some embodiments, when the target content is an offline web article, the continuity data is offline web article continuity data, and the offline web article continuity data includes a file of the offline web article.

In some embodiments, when the target content is an online e-book, the continuity data is online e-book continuity data, and the online e-book continuity data includes an identifier and a reading progress of the online e-book.

In some embodiments, when the target content is an offline e-book, the continuity data is offline e-book continuity data, and the offline e-book continuity data includes a file and a reading progress of the offline e-book.

In some embodiments, the display unit continuously displays the target content in the following manner.

When the target content is the online web article, the display unit continuously displays the online web article based on the URI received from the source display apparatus.

Alternatively, when the target content is the offline web article, the display unit continuously displays the offline web article based on the file of the offline web article received from the sending unit of the source display apparatus.

Alternatively, when the target content is the online e-book, the display unit continuously displays the online e-book based on the identifier of the online e-book received from the sending unit of the source display apparatus.

Alternatively, when the target content is the offline e-book, the display unit continuously displays the offline e-book based on the file of the online e-book received from the sending unit of the source display apparatus.

In some embodiments, the online web article continuity data further includes at least one of a title, a parsing source, parsing time, a server source, and an integrity check identifier of the online web article.

In some embodiments, the offline web article continuity data further includes at least one of a URI, a title, a parsing source, parsing time, a server source, and an integrity check identifier of the offline web article.

In some embodiments, the online e-book continuity data further includes a chapter structure of the online e-book.

In some embodiments, the offline e-book continuity data further includes either the identifier or the chapter structure of the online e-book.

In some embodiments, the continuity data includes an application package name, and the application package name indicates the target display apparatus to open the target content through an application corresponding to the application package name.

In some embodiments, the continuity data further includes identity authentication information of a first application that is installed on the source display apparatus and that displays the target content, and the identity authentication information enables the target display apparatus to have permission to obtain the target content from a server of the first application.

In some embodiments, the server of the first application that is installed on the source display apparatus and that displays the target content and a server of a second application that is installed on the target display apparatus and that continuously displays the target content have mutual access permission, to enable the server of the second application to have permission to access the target content in the server of the first application, where the first application of the source display apparatus obtains the target content from the server of the first application.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be configured to input instructions, to perform functions described in this application and generate output information. The output information may be applied to one or more output devices in a known manner. For a purpose of this application, a processing system includes any system that has a processor like a digital signal processor (Digital Signal Processor, DSP), a microcontroller, an application-specific integrated circuit (Application-Specific Integrated Circuit, ASIC), or a microprocessor.

The program code may be implemented in a high-level procedural language or an object-oriented programming language, to communicate with the processing system. The program code may alternatively be implemented by using an assembly language or a machine language when needed. Actually, the mechanisms described in this application are not limited to a scope of any particular programming language. In any case, the language may be a compiled language or an interpretive language.

In some cases, the disclosed embodiments may be implemented by hardware, firmware, software, or any combination thereof. The disclosed embodiments may be alternatively implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, the machine-readable medium may include any mechanism for storing or transmitting information in a machine (for example, a computer)-readable form. The machine-readable medium includes but is not limited to a floppy disk, a compact disc, an optical disc, a compact disc read-only memory (CD-ROMs), a magneto-optical disc, a read-only memory (Read Only Memory, ROM), random access memory (Random Access Memory, RAM), erasable programmable read-only memory (Erasable Programmable Read Only Memory, EPROM), electrically erasable programmable read-only memory (Electrically Erasable Programmable Read-Only Memory, EEPROM), a magnetic or an optical card, a flash memory, or a tangible machine-readable memory that is configured to transmit information through Internet by using electricity, light, sound or another form of propagating signal (for example, carrier, an infrared signal, or a digital signal). Therefore, the machine-readable medium includes any type of machine-readable medium that is suitable for storing or transmitting electronic instructions or information in a machine (for example, a computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from that shown in the descriptive accompanying drawings. In addition, inclusion of the structural or method features in a particular figure does not imply that such features are required in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be implemented by a combination of a plurality of physical units/modules. Physical implementations of these logical units/modules are not the most important, and a combination of functions implemented by these logical units/modules is a key to resolving technical problems proposed in this application. In addition, to highlight an innovative part of this application, a unit/module that is not closely related to resolving the technical problems proposed in this application is not introduced in the foregoing device embodiments of this application. This does not indicate that there is not another unit/module in the foregoing device embodiments.

It should be noted that, in examples and the specification of this patent, relational terms such as first and second are only used to distinguish one entity or operation from another entity or operation, and do not necessarily require or imply that any actual relationship or sequence exists between these entities or operations. Moreover, terms "include", "comprise", or any other variants thereof are intended to cover a non-exclusive inclusion, so that a process, a method, an article, or a device that includes a list of elements includes those elements, and also includes other elements which are not expressly listed, or further includes elements inherent to this process, method, article, or device. An element preceded by a statement "includes a" does not, without more constraints, preclude the presence of additional identical elements in the process, method, article, or device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A screen identification method for distributed display, comprising:
determining, by a first electronic device, target content that is in the first electronic device and that is to be continuously displayed through another electronic device;
determining, by the first electronic device from a plurality of electronic devices based on the target content, a second electronic device suitable for continuously displaying the target content;
sending, by the first electronic device to the second electronic device, continuity data needed for continuously displaying the target content on the second electronic device; and
continuously displaying, by the second electronic device, the target content based on the continuity data received from the first electronic device.

2. The method according to claim 1, wherein the target content is content currently displayed on the first electronic device.

3. The method according to claim 1 or 2, wherein the determining, by the first electronic device from a plurality of electronic devices based on the target content, a second electronic device suitable for continuously displaying the target content comprises:
determining, by the first electronic device based on the target content, an application scenario corresponding to the target content; and
determining, by the first electronic device from the plurality of electronic devices based on the application scenario, the second electronic device suitable for continuously displaying the target content.

4. The method according to claim 3, wherein the determining, by the first electronic device from a plurality of electronic devices based on the target content, a second electronic device suitable for continuously displaying the target content comprises:
determining, by the first electronic device based on the target content, that the application scenario corresponding to the target content is a reading scenario; and
determining, by the first electronic device from the plurality of electronic devices based on the reading scenario, the second electronic device suitable for continuously displaying the target content in the reading scenario.

5. The method according to claim 3 or 4, wherein the determining, by the first electronic device based on the target content, an application scenario corresponding to the target content comprises:
determining, by the first electronic device based on the target content, a first application that is installed on the first electronic device and that displays the target content; and
determining, by the first electronic device based on the first application, the application scenario corresponding to the target content.

6. The method according to claim 3, wherein the sending, by the first electronic device to the second electronic device, continuity data needed for continuously displaying the target content on the second electronic device comprises:
when the target content is online content, sending, by the first electronic device to the second electronic device through Bluetooth, the continuity data needed for continuously displaying the target content on the second electronic device; or
when the target content is offline content, sending, by the first electronic device to the second electronic device through wireless-fidelity point-to-point (Wireless-Fidelity point-to-point, Wi-Fi P2P), the continuity data needed for continuously displaying the online content on the second electronic device.

7. The method according to any one of claims 1 to 6, wherein when the target content is an online web article, the continuity data is online web article continuity data, and the online web article continuity data comprises a uniform resource identifier (Uniform Resource Identifier, URI) of the online web article;
when the target content is an offline web article, the continuity data is offline web article continuity data, and the offline web article continuity data comprises a file of the offline web article;
when the target content is an online e-book, the continuity data is online e-book continuity data, and the online e-book continuity data comprises an identifier and a reading progress of the online e-book; or
when the target content is an offline e-book, the continuity data is offline e-book continuity data, and the offline e-book continuity data comprises a file and a reading progress of the offline e-book.

8. The method according to claim 7, wherein the continuously displaying, by the second electronic device, the target content based on the continuity data received from the first electronic device comprises:
when the target content is the online web article, continuously displaying, by the second electronic device, the online web article based on the URI received from the first electronic device;
when the target content is the offline web article, continuously displaying, by the second electronic device, the offline web article based on the file of the offline web article received from the first electronic device;
when the target content is the online e-book, continuously displaying, by the second electronic device, the online e-book based on the identifier of the online e-book received from the first electronic device; or
when the target content is the offline e-book, continuously displaying, by the second electronic device, the offline e-book based on the file of the online e-book received from the first electronic device.

9. The method according to claim 7 or 8, wherein the online web article continuity data further comprises at least one of a title, a parsing source, parsing time, a server source, and an integrity check identifier of the online web article.

10. The method according to claim 7 or 8, wherein the offline web article continuity data further comprises at least one of a URI, a title, a parsing source, parsing time, a server source, and an integrity check identifier of the offline web article.

11. The method according to claim 7 or 8, wherein the online e-book continuity data further comprises a chapter structure of the online e-book.

12. The method according to claim 7 or 8, wherein the offline e-book continuity data further comprises either the identifier or the chapter structure of the online e-book.

13. The method according to any one of claims 1 to 12, wherein a second application that displays the target content is installed on the second electronic device, and the method further comprises:
adding, by the second electronic device, the target content to a bookshelf of the second application based on the continuity data received from the first electronic device.

14. The method according to claim 13, further comprising:
adding, by the second electronic device, the target content to a read later widget of the second application installed on the second electronic device based on the continuity data received from the first electronic device.

15. The method according to any one of claims 1 to 14, wherein the continuity data comprises an application package name, and the application package name indicates the second electronic device to open the target content through an application corresponding to the application package name.

16. The method according to claim 15, wherein the continuity data further comprises identity authentication information of the first application that is installed on the first electronic device and that displays the target content, and the identity authentication information enables the second electronic device to have permission to obtain the target content from a server of the first application.

17. The method according to claim 15 or 16, wherein the server of the first application that is installed on the first electronic device and that displays the target content and a server of the second application that is installed on the second electronic device and that continuously displays the target content have mutual access permission, to enable the server of the second application to have permission to access the target content in the server of the first application, wherein the first application of the first electronic device obtains the target content from the server of the first application.

18. A screen identification method for distributed display, comprising:
determining, by a first electronic device, target content that is in the first electronic device and that is to be continuously displayed through another electronic device;
determining, by the first electronic device from a plurality of electronic devices based on the target content, a second electronic device suitable for continuously displaying the target content; and
sending, by the first electronic device to the second electronic device, continuity data needed for continuously displaying the target content on the second electronic device.

19. The method according to claim 18, wherein the target content is content currently displayed on the first electronic device.

20. The method according to claim 18 or 19, wherein the determining, by the first electronic device from a plurality of electronic devices based on the target content, a second electronic device suitable for continuously displaying the target content comprises:
determining, by the first electronic device based on the target content, an application scenario corresponding to the target content; and
determining, by the first electronic device from the plurality of electronic devices based on the application scenario, the second electronic device suitable for continuously displaying the target content.

21. The method according to claim 20, wherein the determining, by the first electronic device from a plurality of electronic devices based on the target content, a second electronic device suitable for continuously displaying the target content comprises:
determining, by the first electronic device based on the target content, that the application scenario corresponding to the target content is a reading scenario; and
determining, by the first electronic device from the plurality of electronic devices based on the reading scenario, the second electronic device suitable for continuously displaying the target content in the reading scenario.

22. The method according to claim 20 or 21, wherein the determining, by the first electronic device based on the target content, an application scenario corresponding to the target content comprises:
determining, by the first electronic device based on the target content, a first application that is installed on the first electronic device and that displays the target content; and
determining, by the first electronic device based on the first application, the application scenario corresponding to the target content.

23. The method according to any one of claims 18 to 22, wherein the sending, by the first electronic device to the second electronic device, continuity data needed for continuously displaying the target content on the second electronic device comprises:
when the target content is online content, sending, by the first electronic device to the second electronic device through Bluetooth, the continuity data needed for continuously displaying the target content on the second electronic device; or
when the target content is offline content, sending, by the first electronic device to the second electronic device through wireless-fidelity point-to-point (Wireless-Fidelity point-to-point, Wi-Fi P2P), the continuity data needed for continuously displaying the online content on the second electronic device.

24. The method according to claim 23, wherein when the target content is an online web article, the continuity data is online web article continuity data, and the online web article continuity data comprises a uniform resource identifier (Uniform Resource Identifier, URI) for the second electronic device to continuously display the online web article;
when the target content is an offline web article, the continuity data is offline web article continuity data, and the offline web article continuity data comprises a file for the second electronic device to continuously display the offline web article;
when the target content is an online e-book, the continuity data is online e-book continuity data, and the online e-book continuity data comprises an identifier and a reading progress for the second electronic device to continuously display the online e-book; or
when the target content is an offline e-book, the continuity data is offline e-book continuity data, and the offline e-book continuity data comprises a file and a reading progress for the second electronic device to continuously display the offline e-book.

25. The method according to claim 24, wherein the online web article continuity data further comprises at least one of a title, a parsing source, parsing time, a server source, and an integrity check identifier of the online web article.

26. The method according to claim 24, wherein the offline web article continuity data further comprises at least one of a URI, a title, a parsing source, parsing time, a server source, and an integrity check identifier of the offline web article.

27. The method according to claim 24, wherein the online e-book continuity data further comprises a chapter structure of the online e-book.

28. The method according to claim 24, wherein the offline e-book continuity data further comprises either the identifier or the chapter structure of the online e-book.

29. The method according to any one of claims 18 to 28, wherein the continuity data comprises an application package name, and the application package name indicates the second electronic device to open the target content through an application corresponding to the application package name.

30. The method according to claim 29, wherein the continuity data further comprises identity authentication information of the first application that is installed on the first electronic device and that displays the target content, and the identity authentication information enables the second electronic device to have permission to obtain the target content from a server of the first application.

31. The method according to claim 29 or 30, wherein the server of the first application that is installed on the first electronic device and that displays the target content and a server of a second application that is installed on the second electronic device and that continuously displays the target content have mutual access permission, to enable the server of the second application to have permission to access the target content in the server of the first application, wherein the first application of the first electronic device obtains the target content from the server of the first application.

32. A screen identification method for distributed display, comprising:
receiving, by a second electronic device, continuity data that is sent by a first electronic device and that is needed for continuously displaying target content on the second electronic device, wherein the target content is content that is determined by the first electronic device, that is in the first electronic device, and that is to be continuously displayed through another electronic device; and
continuously displaying, by the second electronic device, the target content based on the continuity data received from the first electronic device.

33. The method according to claim 32, wherein when the target content is an online web article, the continuity data is online web article continuity data, and the online web article continuity data comprises a uniform resource identifier (Uniform Resource Identifier, URI) of the online web article;
when the target content is an offline web article, the continuity data is offline web article continuity data, and the offline web article continuity data comprises a file of the offline web article;
when the target content is an online e-book, the continuity data is online e-book continuity data, and the online e-book continuity data comprises an identifier and a reading progress of the online e-book; or
when the target content is an offline e-book, the continuity data is offline e-book continuity data, and the offline e-book continuity data comprises a file and a reading progress of the offline e-book.

34. The method according to claim 33, wherein the continuously displaying, by the second electronic device, the target content based on the continuity data received from the first electronic device comprises:
when the target content is the online web article, continuously displaying, by the second electronic device, the online web article based on the URI received from the first electronic device;
when the target content is the offline web article, continuously displaying, by the second electronic device, the offline web article based on the file of the offline web article received from the first electronic device;
when the target content is the online e-book, continuously displaying, by the second electronic device, the online e-book based on the identifier of the online e-book received from the first electronic device; or
when the target content is the offline e-book, continuously displaying, by the second electronic device, the offline e-book based on the file of the online e-book received from the first electronic device.

35. The method according to any one of claims 32 to 34, wherein a second application that displays the target content is installed on the second electronic device, and the method further comprises:
adding, by the second electronic device, the target content to a bookshelf of the second application based on the continuity data received from the first electronic device.

36. The method according to claim 35, further comprising:
adding, by the second electronic device, the target content to a read later widget of the second application installed on the second electronic device based on the continuity data received from the first electronic device.

37. A computer-readable storage medium, wherein the computer-readable storage medium stores instructions, and when the instructions are executed on an electronic device, the electronic device is enabled to perform the method according to any one of claims 18 to 31 or the method according to any one of claims 32 to 36.

38. A computer program product, wherein the computer program product comprises instructions, and the instructions implement the method according to any one of claims 18 to 31 or the method according to any one of claims 32 to 36.

39. A chip apparatus, wherein the chip apparatus comprises:
a communication interface, configured to input and/or output information; and
a processor, configured to execute a computer executable program, to enable a device on which the chip apparatus is installed to perform the method according to any one of claims 18 to 31 or the method according to any one of claims 32 to 36.

40. An electronic device, comprising:
a memory, configured to store instructions executed by one or more processors of the electronic device; and
a processor, wherein when the instructions are executed by the one or more processors, the processor is configured to perform the method according to any one of claims 18 to 31 or the method according to any one of claims 32 to 36.
